# EUROPEAN PATENT SPECIFICATION

(11) **EP 3 916 262 B1**
(45) Date of publication and mention of the grant of the patent: **28.12.2022**
(21) Application number: 21170073.7
(22) Date of filing: 23.04.2021
(51) Int. Cl.: F16D 55/224, F16D 65/56

(54) **BRAKE DEVICE**
BREMSVORRICHTUNG
DISPOSITIF DE FREIN

(30) Priority: 26.05.2020 JP 2020091657
(43) Date of publication of application: 01.12.2021
(73) Proprietor: Nabtesco Corporation, Tokyo 102-0093 (JP)
(72) Inventor: OHNO, Tomoya, Tokyo 102-0093 (JP)
(74) Representative: Grünecker Patent- und Rechtsanwälte PartG mbB

(56) References cited:
- WO-A1-2011/095423
- US-A1- 2018 058 527

## Description

The present invention relates to a brake device. Such a brake device is known from the WO2011095423A.

European Patent Application Publication No. EP 0732247 ("the '247 Publication") discloses a disc brake device for use in railroad vehicles. The brake device includes a pair of rotating arms for sandwiching a disc fixedly attached to an axle. Each of the rotating arms has at a tip end portion thereof an attaching portion mounted thereto. A brake pad is fixedly attached to the attaching portion. Between the brake pads, the disc rotatable with a wheel is provided. Between the base end portions of the rotating arms, a gap adjusting mechanism for adjusting the gap between the disc and the brake pads is provided. The gap adjusting mechanism is coupled to the base end portion of each of the rotating arms. One of the rotating arms is coupled to an output shaft fixedly attached to a piston provided within a cylinder so that the rotating arm is rotatable by a force provided from the output shaft. In the brake device disclosed in the '247 Publication, as the output shaft protrudes, the brake pads supported on the tip end portions of the rotating arms touch the disc.

The brake device disclosed in the '247 Publication includes a transmission rod for transmitting the force produced by the output shaft to the gap adjusting mechanism. The transmission rod extends, as a whole, in a direction from the tip end portions of the rotating arms to their base end portions. In the brake device disclosed in the '247 Publication, as the output shaft protrudes, the transmission rod moves in the axial direction of the transmission rod to approach the gap adjusting mechanism. Once the force produced by the transmission rod is transmitted to the gap adjusting mechanism, an internally threaded female screw portion of the gap adjusting mechanism rotates relative to an externally threaded male screw portion of the gap adjusting mechanism. If the female screw portion rotates relative to the male screw portion in this manner, the distance between the base end portions of the rotating arms increases. This in turn causes the rotating arms to rotate such that the distance between the tip end portions of the rotating arms can decrease. In this manner, the gap between the disc and the brake pads is adjusted.

In the brake device disclosed in the '247 Publication, the rotating arms may rotate after the gap adjusting mechanism adjusts the gap. This may change the relative positions of the rotating arms and the gap adjusting mechanism and resultantly change the distance between the transmission rod and the gap adjusting mechanism. If the distance between the gap adjusting mechanism and the transmission rod increases, for example, this means that the adjustment made by the gap adjusting mechanism for the gap is reduced. Accordingly, the brake device disclosed in the '247 Publication encounters the problem of insufficient adjustment. The same problem may arise not only in the brake device provided with the gap adjusting mechanism including the male and female screw portions but also in brake devices including a gap adjusting mechanism for receiving the force produced by the output shaft transmitted thereto.

The present invention is made in light of the above and is designed to provide a brake device including a gap adjusting mechanism that can reliably make designated adjustment for a gap.

To solve the above problems, a brake device according to claim 1 is provided. In accordance with one aspect of the present invention, provided is a brake device that includes an output shaft linearly movable, a pair of rotating arms, where each rotating arm has a friction member fixedly attached to a tip end portion thereof, where the rotating arms are rotatable when acted upon by the linear movement of the output shaft, a gap adjusting mechanism coupled to base end portions of the rotating arms that are positioned opposite to the tip end portions, where each of the rotating arms has a rotation center between the base and tip end portions thereof, where the gap adjusting mechanism is configured to adjust a distance between the base end portions of the rotating arms, and a converting portion for converting the linear movement of the output shaft into movement in a rotational axis direction extending along a rotational axis of the rotating arms. The gap adjusting mechanism increases the distance between the base end portions of the rotating arms as the movement in the rotational axis direction is made.

With the design described above, the relative positions of the gap adjusting mechanism and the converting portion in the rotational axis direction remain unchanged even if the rotating arms rotate and this changes the relative positions of the rotating arms and the gap adjusting mechanism. According to the above design, the distance between the base end portions of the rotating arms increases as movement is made in the rotational axis direction, but the movement in the rotational axis direction does not change the position of the gap adjusting mechanism. In this manner, the adjustment can be reliably made by the gap adjusting mechanism for the gap even if the rotating arms rotate and this may change the relative positions of the rotating arms and the gap adjusting mechanism.

In the brake device described above, the converting portion includes a movable member movable in the rotational axis direction relative to the gap adjusting mechanism when acted upon by the linear movement of the output shaft, and a coupling portion coupling together the movable member and the gap adjusting mechanism, and the coupling portion is movable relative to the movable member in a direction orthogonal to the rotational axis direction.

In the brake device described above, the coupling portion may include a rod member coupling together the movable member and the gap adjusting mechanism, and the movable member may have an insertion groove therein depressed in a direction orthogonal to the rotational axis direction, and the rod member may be supported in the insertion groove such that the rod member is movable in the direction orthogonal to the rotational axis direction.

In the brake device described above, when the rotational axis direction is orthogonal to a plurality of directions including a first orthogonal direction and a second orthogonal direction, the first orthogonal direction denotes a direction extending along a straight line connecting together the base end portions of the rotating arms to which the gap adjusting mechanism is coupled and the second orthogonal direction denotes a direction orthogonal to the first orthogonal direction and the rotational axis direction, the insertion groove may be depressed in the second orthogonal direction and a difference in size in the first orthogonal direction between the insertion groove and the rod member may be greater than a difference in size in the rotational axis direction between the insertion groove and the rod member.

In the brake device described above, the converting portion may include a first elastic member for urging the movable member in a direction opposite to a direction in which the movable member is movable when acted upon by the linear movement of the output shaft.

In the brake device described above, the converting portion may include a transmitting portion for converting, when acted upon by the linear movement of the output shaft, the linear movement into the movement in the rotational axis direction and transmitting the movement in the rotational axis direction to the movable member, and a second elastic member interposed between the transmitting portion and the movable member.

In the brake device described above, maximum elastic deformation of the second elastic member in the rotational axis direction may be greater than maximum movement of the movable member in the rotational axis direction.

In the brake device described above, the converting portion may include a first elastic member for urging the movable member in a direction opposite to a direction in which the movable member is movable when acted upon by the linear movement of the output shaft, and the first and second elastic members may be coupled together via the movable member such that the first and second elastic members are arranged in parallel and at least partly overlap each other in the rotational axis direction.

In the brake device described above, the transmitting portion may have an inclined surface inclined such that the linear movement of the output shaft is converted into the movement in the rotational axis direction.

In the brake device described above, the inclined surface may be a flat surface, and when seen in a direction orthogonal to both of a direction of the linear movement of the output shaft and the rotational axis direction, an acute angle formed between the direction of the linear movement of the output shaft and the inclined surface may be greater than 45 degrees.

In the brake device described above, the gap adjusting mechanism may include a male screw portion provided between the base end portions of the rotating arms, and a female screw portion receiving the male screw portion fitted therein, where the female screw portion is configured to increase the distance between the base end portions of the rotating arms when the female screw portion rotates in one direction circumferentially relative to the male screw portion, and the female screw portion may rotate circumferentially relative to the male screw portion when acted upon by movement in the rotational axis direction.

In the brake device described above, the gap adjusting mechanism may include a male screw portion provided between the base end portions of the rotating arms, and a female screw portion receiving the male screw portion fitted therein, where the female screw portion is configured to increase the distance between the base end portions of the rotating arms when the female screw portion rotates in one direction circumferentially relative to the male screw portion, the female screw portion may rotate circumferentially relative to the male screw portion when acted upon by the movement in the rotational axis direction, and the gap adjusting mechanism may further include a one-way clutch for (i), when the movable member moves toward one side in the rotational axis direction, allowing transmission of a force enabling the female screw portion to rotate relative to the male screw portion in one direction circumferentially and (ii), when the movable member moves toward the other side in the rotational axis direction, prohibiting transmission of a force enabling the female screw portion to rotate relative to the male screw portion in the other direction circumferentially.

To solve the above problem and in accordance with another aspect of the present invention, provided is a brake device that includes an output shaft linearly movable, a pair of rotating arms, where each rotating arm has a friction member fixedly attached to a tip end portion thereof, where the rotating arms are rotatable when acted upon by the linear movement of the output shaft, a gap adjusting mechanism coupled to base end portions of the rotating arms that are positioned opposite to the tip end portions, where each of the rotating arms has a rotation center between the base and tip end portions thereof, where the gap adjusting mechanism is configured to adjust a distance between the base end portions of the rotating arms, and a converting portion for converting the linear movement of the output shaft into movement in a rotational axis direction extending along a rotational axis of the rotating arms. The gap adjusting mechanism increases the distance between the base end portions of the rotating arms as the movement in the rotational axis direction is made. The converting portion includes a movable member movable in the rotational axis direction relative to the gap adjusting mechanism when acted upon by the linear movement of the output shaft, a coupling portion coupling together the movable member and the gap adjusting mechanism, where the coupling portion is movable relative to the movable member in a direction orthogonal to the rotational axis direction, a first elastic member for urging the movable member in a direction opposite to a direction in which the movable member is movable when acted upon by the linear movement of the output shaft, a transmitting portion for converting, when acted upon by the linear movement of the output shaft, the linear movement into the movement in the rotational axis direction, and transmitting the movement in the rotational axis direction to the movable member, and a second elastic member interposed between the transmitting portion and the movable member. The first and second elastic members are coupled together via the movable member such that the first and second elastic members are arranged in parallel and at least partly overlap each other in the rotational axis direction. The coupling portion includes a rod member coupling together the movable member and the gap adjusting mechanism. The movable member has an insertion groove therein depressed in a direction orthogonal to the rotational axis direction, and the rod member is supported in the insertion groove such that the rod member is movable in the direction orthogonal to the rotational axis direction. The gap adjusting mechanism includes a male screw portion provided between the base end portions of the rotating arms, and a female screw portion receiving the male screw portion fitted therein, where the female screw portion is configured to increase the distance between the base end portions of the rotating arms when the female screw portion rotates in one direction circumferentially relative to the male screw portion. The female screw portion rotates circumferentially relative to the male screw portion when acted upon by the movement in the rotational axis direction. The gap adjusting mechanism further includes a one-way clutch for (i), when the movable member moves toward one side in the rotational axis direction, allowing transmission of a force enabling the female screw portion to rotate relative to the male screw portion in one direction circumferentially and (ii), when the movable member moves toward the other side in the rotational axis direction, prohibiting transmission of a force enabling the female screw portion to rotate relative to the male screw portion in the other direction circumferentially.

With the design described above, the relative positions of the gap adjusting mechanism and the converting portion in the rotational axis direction remain unchanged even if the rotating arms rotate and this changes the relative positions of the rotating arms and the gap adjusting mechanism. According to the above design, the distance between the base end portions of the rotating arms increases as movement is made in the rotational axis direction, but the movement in the rotational axis direction does not change the position of the gap adjusting mechanism. In this manner, the adjustment can be reliably made by the gap adjusting mechanism for the gap even if the rotating arms rotate and this may change the relative positions of the rotating arms and the gap adjusting mechanism.

Other aspects and advantages of the present invention will be made apparent from the following description, taken in conjunction with the accompanying drawings, illustrating by way of example the principles of the present invention.

The invention, together with objects and advantages thereof, may best be understood by reference to the following description of the presently preferred embodiments together with the accompanying drawings in which:
Fig. 1 is a perspective view of a brake device,
Fig. 2 is a plan view showing the brake device with a partial sectional view,
Fig. 3 is a sectional view along the line 3-3 in Fig. 2,
Fig. 4 is a sectional view along the line 4-4 in Fig. 3, and
Fig. 5 is a sectional view along the line 5-5 in Fig. 3.

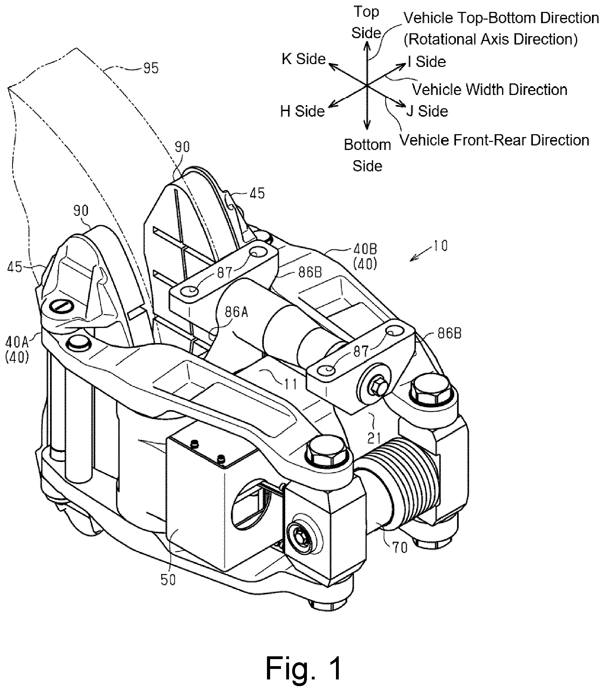

The following describes one embodiment of a brake device attached to a railroad vehicle with reference to Figs. 1 to 5.

As shown in Fig. 1, a brake device 10 is a caliper brake device including a pair of brake pads 90. The brake device 10 is designed to brake rotation of a disc 95, which is rotatable integrally with the wheel of the railroad vehicle, by sandwiching the disc 95 between the brake pads 90. The brake device 10 and the disc 95 together constitute a disc brake device.

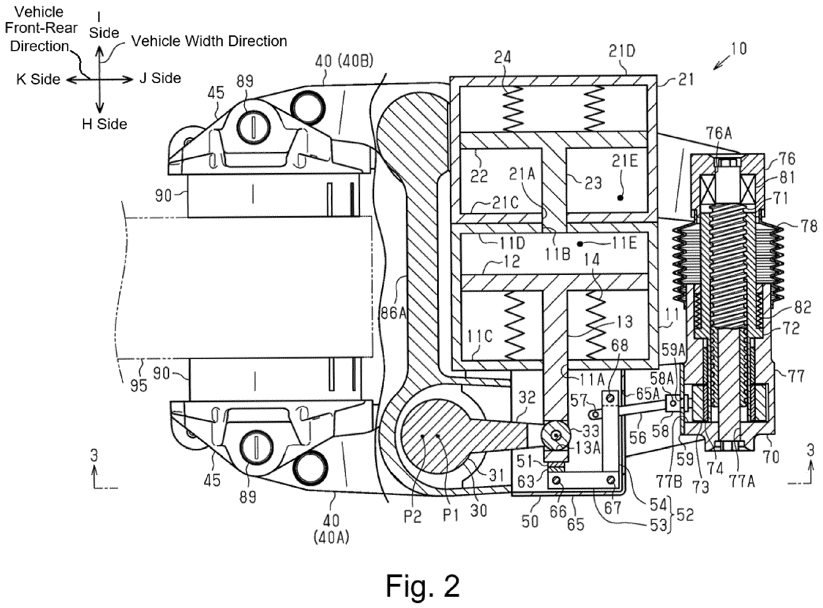

As shown in Fig 2, the brake device 10 includes a first cylinder 11 having a columnar shape. The central axis of the first cylinder 11 extends along the width direction of the vehicle. The first cylinder 11 has a circular cylindrical inner space defined therein. The first cylinder 11 has an end wall 11C on the H side in the vehicle width direction (the lower side in Fig. 2), which has a through hole 11A formed therein penetrating the end wall 11C in the thickness direction. The through hole 11A is positioned at the center of the end wall 11C of the first cylinder 11, which is on the H side in the vehicle width direction. The first cylinder 11 also has an end wall 11D on the I side in the vehicle width direction (the upper side in Fig. 2), which has a through hole 11B formed therein penetrating the end wall 11D in the thickness direction. The through hole 11B is positioned at the center of the end wall 11D of the first cylinder 11, which is on the I side in the vehicle width direction. The first cylinder 11 is fixedly attached to a caliper body 86A. As shown in Fig. 1, the caliper body 86A is supported on a bracket 86B for attaching the brake device 10 onto a bogie of the railroad vehicle. The bracket 86B has a plurality of bolt holes 87 formed therein. Bolts are inserted through the bolt holes 87 to secure the bracket 86B onto the bogie of the railroad vehicle.

As shown in Fig. 2, the first cylinder 11 has a first piston 12 disposed therein, and the first piston 12 is linearly movable along the axial direction of the first cylinder 11. The first piston 12 is substantially shaped like a disc. The outer diameter of the first piston 12 is substantially equal to the inner diameter of the first cylinder 11. The first piston 12 partitions the inner space of the first cylinder 11 into two parts arranged next to each other in the axial direction of the first cylinder 11.

From the center of the first piston 12, a columnar output shaft 13 extends toward the H side in the vehicle width direction. The first piston 12 and the output shaft 13 are formed in one piece with each other. The output shaft 13 is linearly movable along the axial direction of the first cylinder 11 together with the first piston 12. The tip end portion of the output shaft 13 passes through the through hole 11A formed in the first cylinder 11 to reach the outside of the first cylinder 11. The tip end portion of the output shaft 13 is penetrated by an insertion hole 13A in the direction orthogonal to the central axis of the output shaft 13.

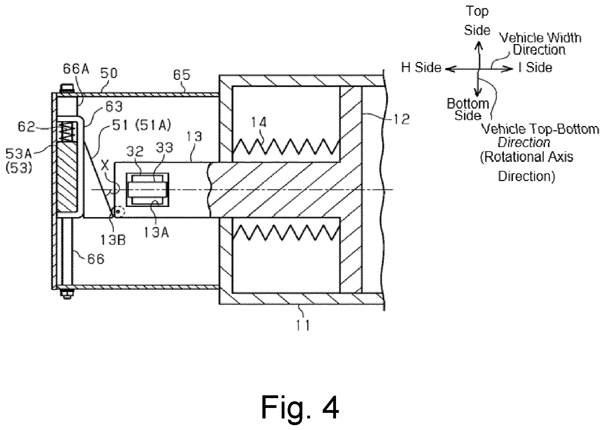

As shown in Fig. 4, a rotational body 13B substantially shaped like a circular column is rotatably supported on the output shaft 13 at a position between the insertion hole 13A and the tip end. The central axis of the rotational body 13B extends in the vehicle front-rear direction (the direction orthogonal to the plane of the paper in Fig. 4). A radially outer portion of the rotational body 13B protrudes beyond the tip-side end surface of the output shaft 13 toward the H side in the vehicle width direction. In the tip end portion of the output shaft 13, the rotational body 13B is positioned on the lower side in the vehicle top-bottom direction (the lower side in Fig. 4).

As shown in Fig. 2, the first cylinder 11 has a first spring 14 disposed therein. The first spring 14 is configured to urge the first piston 12 in a direction from the H side toward the I side in the vehicle width direction within the first cylinder 11. The first spring 14 is positioned between the end wall 11C of the first cylinder 11, which is positioned on the H side in the vehicle width direction, and the first piston 12. In the inner space within the first cylinder 11, a space 11E is defined on the I side in the vehicle width direction with respect to the first piston 12 and receives compressed air fed from an air source, which is not shown.

On the end wall 11D of the first cylinder 11 on the I side in the vehicle width direction, a columnar second cylinder 21 is fixedly attached. The central axis of the second cylinder 21 is aligned with the central axis of the first cylinder 11. The second cylinder 21 has a circular cylindrical inner space defined therein. The second cylinder 21 has an end wall 21C on the H side in the vehicle width direction, which has a through hole 21A formed therein penetrating the end wall 21C in the thickness direction. The through hole 21A is positioned at the center of the end wall 21C of the second cylinder 21, which is on the H side in the vehicle width direction, and is in communication with the through hole 11B in the first cylinder 11.

The second cylinder 21 has a second piston 22 disposed therein, and the second piston 22 is linearly movable along the axial direction of the second cylinder 21. The second piston 22 is substantially shaped like a disc. The outer diameter of the second piston 22 is substantially equal to the inner diameter of the second cylinder 21. The second piston 22 partitions the inner space of the second cylinder 21 into two parts arranged next to each other in the axial direction of the second cylinder 21.

From the center of the second piston 22, a columnar drive shaft 23 extends toward the H side in the vehicle width direction. The second piston 22 and the drive shaft 23 are formed in one piece with each other. The drive shaft 23 is inserted through the through hole 21A in the second cylinder 21 and the through hole 11B in the first cylinder 11. The drive shaft 23 is positioned on the I side in the vehicle width direction and aligned with the output shaft 13. The drive shaft 23 is linearly movable along the axial direction of the second cylinder 21 together with the second piston 22.

The second cylinder 21 has a second spring 24 disposed therein. The second spring 24 is configured to urge the second piston 22 in a direction from the I side toward the H side in the vehicle width direction within the second cylinder 21. The second spring 24 is positioned between the end wall 21D of the second cylinder 21, which is positioned on the I side in the vehicle width direction, and the second piston 22. The urging force produced by the second spring 24 is greater than the urging force produced by the first spring 14. In the inner space within the second cylinder 21, a space 21E is defined on the H side in the vehicle width direction with respect to the second piston 22 and receives compressed air fed from an air source, which is not shown.

While the railroad vehicle is stationary, no compressed air is introduced into the space 21E within the inner space of the second cylinder 21 positioned on the H side with respect to the second piston 22 in the vehicle width direction. Accordingly, the urging force produced by the second spring 24 moves the second piston 22 and the drive shaft 23 toward the H side in the vehicle width direction, so that the drive shaft 23 presses the first piston 12 toward the H side in the vehicle width direction. As a result, irrespective of whether the compressed air is introduced into the first cylinder 11, the first piston 12 and the output shaft 13 move toward the H side in the vehicle width direction.

As shown in Fig. 2, a rotating lever 30 is coupled to the output shaft 13. As the output shaft 13 linearly moves, the rotating lever 30 converts the linear movement made by the output shaft 13 into rotational movement. As a result, the rotating lever 30 rotates. The rotating lever 30 includes a circular portion 31, a lever body 32, and a roller 33. The circular portion 31 of the rotating lever 30 has a circular shape in plan view. The central axis of the circular shape extends along the vehicle top-bottom direction of Fig. 1 (orthogonally to the plane of the paper in Fig. 2). The circular portion 31 is rotatably supported on the H-side end portion of the caliper body 86A in the vehicle width direction. The central axis of the circular portion 31 constitutes a rotation center P1, on which the rotating lever 30 rotates. A lever body 32 substantially shaped like a rod extends from the outer peripheral surface of the circular portion 31. On the tip end portion of the lever body 32, the roller 33, which is substantially shaped like a circular column, is rotatably supported. The rotational axis of the roller 33 is orthogonal to the axial direction of the first cylinder 11 and is parallel to the central axis of the circular portion 31. The tip end portion of the lever body 32 and the roller 33 are inserted in the insertion hole 13A formed in the output shaft 13.

As shown in Fig. 2, while the tip end portion of the lever body 32 and the roller 33 are being inserted in the insertion hole 13A in the output shaft 13, the linear movement of the output shaft 13 toward the H side in the vehicle width direction brings the I-side portion of the inner peripheral surface of the insertion hole 13A in the vehicle width direction into contact with the roller 33. On the other hand, with the tip end portion of the lever body 32 and the roller 33 being inserted in the insertion hole 13A in the output shaft 13, the linear movement of the output shaft 13 toward the I side in the vehicle width direction brings the H-side portion of the inner peripheral surface of the insertion hole 13A in the vehicle width direction into contact with the roller 33.

The circular portion 31 of the rotating lever 30 is coupled with a rotating arm 40, which is rotatable as the output shaft 13 linearly moves to change the relative positions of the brake pads 90 and the disc 95. The rotating arm 40 and the rotating lever 30 are coupled together via a coupling portion centered around a rotation center P2, on which the rotating arm 40 rotates. The central axis of the rotation center P2 extends along the vehicle top-bottom direction. The rotation center P2, on which the rotating arm 40 rotates, is eccentric to the rotation center P1, on which the rotating lever 30 rotates. Specifically, the rotation center P2 is positioned opposite to the lever body 32 with respect to the rotation center P1. As described above, the circular portion 31 of the rotating lever 30 is rotatably supported on the H-side end portion of the caliper body 86A in the vehicle width direction. The rotating arm 40 is thus coupled via the rotating lever 30 with the H-side end portion of the caliper body 86A in the vehicle width direction. Note that the vehicle top-bottom direction is referred to as a rotational axis direction.

The rotating arm 40 generally extends toward both sides in the vehicle front-rear direction (the left-right direction in Fig. 2) from the rotation center P2. The base end of the rotating arm 40 is positioned on the J side in the vehicle front-rear direction relative to the first cylinder 11. The tip end of the rotating arm 40 is positioned on the K side in the vehicle front-rear direction relative to the caliper body 86A.

The tip end portion of the rotating arm 40 is coupled with an attaching portion 45 via a coupling pin 89. The attaching portion 45 is positioned on the I side in the vehicle width direction relative to the rotating arm 40. The attaching portion 45 is swingable about the coupling pin 89. In plan view seen from the direction of the swing axis of the attaching portion 45, the attaching portion 45 has a substantially triangular shape such that the size is greater on the I side in the vehicle width direction. The brake pad 90 is fixedly attached to the I-side surface of the attaching portion 45 in the vehicle width direction. The brake pad 90 is substantially shaped like a flat plate following the end surface of the disc 95. The brake pad 90 is a friction member configured to be pressed against the disc 95 to produce a frictional force serving as a braking force.

Another rotating arm 40 is rotatably coupled with the I-side end of the caliper body 86A in the vehicle width direction. The rotating arm 40 positioned on the I side in the vehicle width direction also has an attaching portion 45 coupled therewith, and another brake pad 90 is fixedly attached to this attaching portion 45. The rotating arm 40, attaching portion 45, and brake pad 90 positioned on the I side in the vehicle width direction are arranged in line symmetry with but otherwise configured in the same manner as their counterparts positioned on the H side in the vehicle width direction. For this reason, the rotating arm 40, attaching portion 45, and brake pad 90 positioned on the I side in the vehicle width direction are denoted by the same reference numerals as their counterparts positioned on the H side in the vehicle width direction and will not be described herein in detail. When the two rotating arms 40 are distinguished from each other, however, different reference numerals are used as follows: the rotating arm 40 positioned on the H side in the vehicle width direction is referred to as the rotating arm 40A, whereas the rotating arm 40 positioned on the I side in the vehicle width direction is referred to as the rotating arm 40B.

The base end portions of the rotating arms 40 forming a pair are coupled together via a gap adjusting mechanism 70, which as a whole extends in the vehicle width direction. The gap adjusting mechanism 70 has a first housing 76 coupled with the rotating arm 40B, which is the I-side one of the rotating arms 40 in the vehicle width direction. The first housing 76 has a bottom and a tubular shape and has a circular cylindrical inner space defined therein. The bottom wall of the first housing 76 has a through hole 76A provided at the center thereof. The first housing 76 is coupled with the rotating arm 40B such that it is rotatable relative to the rotating arm 40B about an axis extending orthogonally to the central axis of the first housing 76.

A male screw portion 71 is fitted onto the inner peripheral surface of the first housing 76 via a substantially tubular first rotation limiting mechanism 81. The male screw portion 71 has a rod-like shape as a whole. The male screw portion 71 has external threads on the outer peripheral surface thereof except for the axial end portions thereof. A given one of the end portions of the male screw portion 71 is inserted into the first rotation limiting mechanism 81. The given end portion of the male screw portion 71 passes through the first rotation limiting mechanism 81 to be also inserted into the through hole 76A formed in the first housing 76. The other end portion of the male screw portion 71 protrudes outside of the first housing 76.

Although not illustrated in detail, the first rotation limiting mechanism 81 limits the rotation of the male screw portion 71 relative to the first housing 76 if torque of less than a predetermined value is applied by the male screw portion 71 to the first housing 76. If torque of the predetermined value or greater is applied by the male screw portion 71 to the first housing 76, on the other hand, the first rotation limiting mechanism 81 allows the rotation of the male screw portion 71 relative to the first housing 76.

The gap adjusting mechanism 70 has a second housing 77 coupled with the rotating arm 40A, which is the H-side one of the rotating arms 40 in the vehicle width direction. The second housing 77 has a bottom and a tubular shape and has a circular cylindrical inner space defined therein. The bottom wall of the second housing 77 has a through hole 77A provided at the center thereof. The second housing 77 is coupled with the rotating arm 40A such that it is rotatable relative to the rotating arm 40A about an axis extending orthogonally to the central axis of the second housing 77.

A female screw portion 72 is fitted onto the inner peripheral surface of the second housing 77 via a substantially tubular second rotation limiting mechanism 82. The female screw portion 72 is shaped like a circular cylinder as a whole. The female screw portion 72 is internally threaded on the inner peripheral surface thereof in a part defined in the axial direction. The female screw portion 72 is fitted inside the second rotation limiting mechanism 82. One of the end portions of the female screw portion 72 abuts the bottom wall of the second housing 77. The other end portion of the female screw portion 72 protrudes outside of the second housing 77.

Although not illustrated in detail, the second rotation limiting mechanism 82 limits the rotation of the female screw portion 72 relative to the second housing 77 if torque of less than a predetermined value is applied by the female screw portion 72 to the second housing 77. If torque of the predetermined value or greater is applied by the female screw portion 72 to the second housing 77, on the other hand, the second rotation limiting mechanism 82 allows the rotation of the female screw portion 72 relative to the second housing 77. Note that the predetermined value defined for the torque to determine whether to allow the relative rotation is smaller for the second rotation limiting mechanism 82 than for the first rotation limiting mechanism 81.

The male screw portion 71 described above is inserted into the female screw portion 72. The external threads of the male screw portion 71 are fitted with the internal threads of the female screw portion 72. The male screw portion 71 extends through the female screw portion 72. The H-side end portion of the male screw portion 71 in the vehicle width direction is also inserted into the through hole 77A in the second housing 77. This means that the first and second housings 76 and 77 of the gap adjusting mechanism 70 are coupled together via the male and female screw portions 71 and 72.

On the outer peripheral surface of the second housing 77, a cylindrical cover 78 is fixedly attached. The cover 78 extends toward the first housing 76 and is fixedly attached also onto the outer peripheral surface of the first housing 76. In other words, the cover 78 is attached to cover the gap between the second housing 77 and the first housing 76 from radially outside. The cover 78 is formed like a bellows in the axial direction so that it is expandable and retractable in the axial direction.

The gap adjusting mechanism 70 described above is configured such that, if torque of a predetermined value or greater is applied to the male screw portion 71 via the through hole 76A in the first housing 76 and the through hole 77A in the second housing 77 using fingers or mechanical tools, the male screw portion 71 rotates relative to the first and second housings 76 and 77 and the female screw portion 72. As a result, the male screw portion 71 moves relative to the female screw portion 72 in the axial direction toward a side determined by the rotating direction. This in turn changes the length of the gap adjusting mechanism 70 in the axial direction, thereby changing the distance between the base end portions of the rotating arms 40. In the above-described manner, the gap adjusting mechanism 70 can be manually adjusted.

In the gap adjusting mechanism 70, an input member 73 is attached via a substantially cylindrical one-way clutch 74 on the outer peripheral surface of the female screw portion 72. The input member 73 is shaped like a circular cylinder, and its inner peripheral surface is attached onto the outer peripheral surface of the one-way clutch 74. The input member 73 and the one-way clutch 74 are provided on the H-side end of the outer peripheral surface of the female screw portion 72 in the vehicle width direction.

Although not illustrated in detail, the one-way clutch 74 prevents the input member 73 from rotating in one direction circumferentially relative to the female screw portion 72 and allows the input member 73 to rotate in the other direction circumferentially relative to the female screw portion 72. Accordingly, if the input member 73 rotates in the one direction circumferentially, the female screw portion 72 follows the input member 73 and thus rotates in the one direction circumferentially. As a result, when the female screw portion 72 rotates relative to the male screw portion 71 in the one direction circumferentially, the gap adjusting mechanism 70 increases the distance between the base end portions of the rotating arms 40. Stated differently, the one-way clutch 74 transmits a force enabling the female screw portion 72 relative to the male screw portion 71 to rotate in the one direction circumferentially. On the other hand, if the input member 73 rotates in the other direction circumferentially, the female screw portion 72 does not follow the input member 73 or does not rotate in the other direction circumferentially. As a result, the female screw portion 72 does not rotate relative to the male screw portion 71 in the other direction circumferentially, and the gap adjusting mechanism 70 thus does not adjust the distance between the base end portions of the rotating arms 40. Stated differently, the one-way clutch 74 does not transmit a force enabling the female screw portion 72 to rotate relative to the male screw portion 71 in the other direction circumferentially.

The circumferential wall of the second housing 77 has a window portion 77B radially penetrating it. The window portion 77B is positioned on the K side in the vehicle front-rear direction. The window portion 77B is positioned at the H-side end portion of the second housing 77 in the vehicle width direction, to be aligned with the input member 73 and the one-way clutch 74. Accordingly, the outer surface of the input member 73 is partially exposed through the window portion 77B toward the K side in the vehicle front-rear direction.

A converting portion 50 for, when acted upon by the linear movement made by the output shaft 13, converting the linear movement into movement in the vehicle top-bottom direction is provided on the H side in the vehicle width direction with respect to the first cylinder 11. The converting portion 50 transmits the movement in the vehicle top-bottom direction to the gap adjusting mechanism 70. The converting portion 50 includes a case 65 enclosing the tip end portion of the output shaft 13. The case 65 is open toward the I side in the vehicle width direction and shaped like a quadrangular box as a whole. The tip end portion of the output shaft 13 is positioned in the internal space within the case 65. The J-side wall portion of the case 65 in the vehicle front-rear direction has an opening 65A formed therein, and the opening 65A penetrates the J-side wall portion in the vehicle front-rear direction.

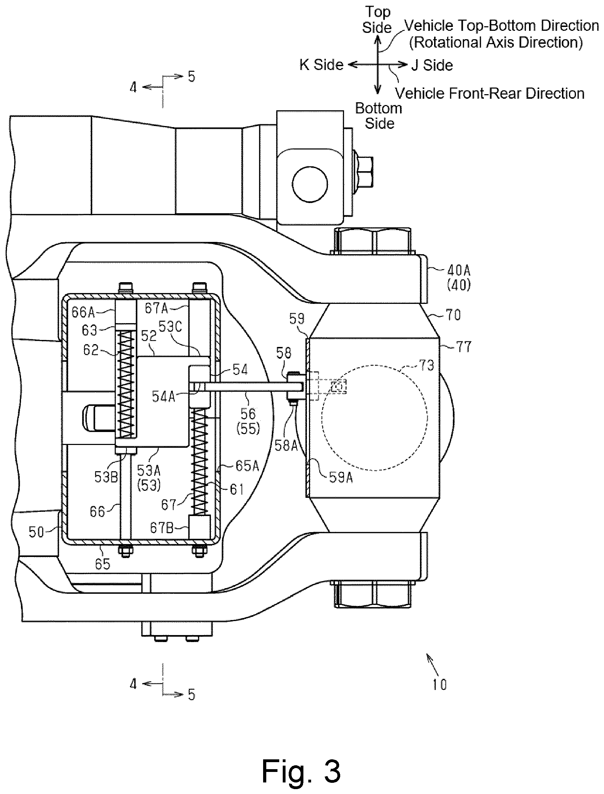

As shown in Fig. 3, the case 65 has a first shaft portion 66 fixedly attached therein, and the first shaft portion 66 is shaped like a circular rod and extends in the vehicle top-bottom direction. When seen in the vehicle width direction, the first shaft portion 66 is positioned so as to overlap the output shaft 13. As shown in Fig. 2, the first shaft portion 66 is positioned in the vicinity of the H-side wall portion of the case 65 in the vehicle width direction. As shown in Fig. 3, the top-side end portion of the first shaft portion 66 has a first stopper 66A fixedly attached thereto, which is configured to serve as a registration member.

As shown in Fig. 3, the case 65 has a second shaft portion 67 fixedly attached therein, and the second shaft portion 67 is shaped like a circular rod and extends in the vehicle top-bottom direction. As shown in Fig. 2, the second shaft portion 67 is positioned in the vicinity of the H-side wall portion of the case 65 in the vehicle width direction. The second shaft portion 67 is positioned on the J side in the vehicle front-rear direction with respect to the first shaft portion 66 and in the vicinity of the J-side wall portion of the case 65 in the vehicle front-rear direction. As shown in Fig. 3, the top-side end portion of the second shaft portion 67 has a second top-side stopper 67A fixedly attached thereto, which is configured to serve as a registration member. The bottom-side end portion of the second shaft portion 67 has a second bottom-side stopper 67B fixedly attached thereto, which is configured to serve as a registration member.

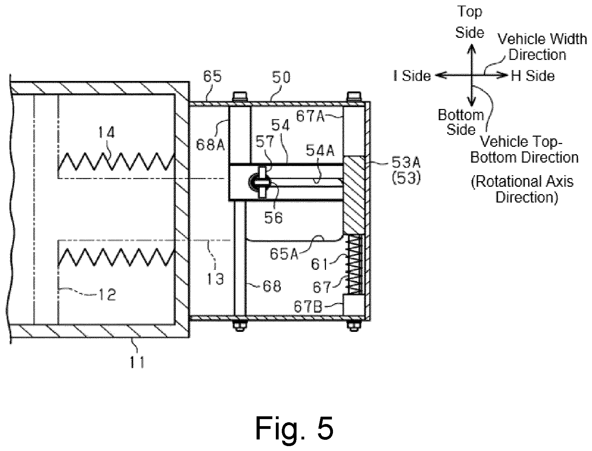

As shown in Fig. 5, the case 65 has a third shaft portion 68 fixedly attached therein, and the third shaft portion 68 is shaped like a circular rod and extends in the vehicle top-bottom direction. As shown in Fig. 2, the third shaft portion 68 is positioned in the vicinity of the J-side wall portion of the case 65 in the vehicle front-rear direction. The third shaft portion 68 is positioned on the I side in the vehicle width direction with respect to the second shaft portion 67 and in the vicinity of the end wall 11C of the first cylinder 11 on the H side in the vehicle width direction. As shown in Fig. 5, the top-side end portion of the third shaft portion 68 has a third stopper 68A fixedly attached thereto, which is configured to serve as a registration member.

As shown in Fig. 3, the first, second and third shaft portions 66, 67 and 68 support a movable member 52, which is movable in the vehicle top-bottom direction relative to the gap adjusting mechanism 70. Specifically, a first movable member 53 of the movable member 52 is supported such that it is movable in the vehicle top-bottom direction relative to the first and second shaft portions 66 and 67. A body portion 53A of the first movable member 53 is positioned between the first shaft portion 66 and the second shaft portion 67. The body portion 53A is shaped like a rectangular plate and extends in the vehicle top-bottom direction. An input portion 53B extends from the bottom-side end portion of the body portion 53A toward the K side in the vehicle front-rear direction. The input portion 53B has a through hole provided therein, which is not shown, and the first shaft portion 66 is inserted through the through hole. An output portion 53C extends from the top-side end portion of the body portion 53A toward the J side in the vehicle front-rear direction. The output portion 53C has a through hole provided therein, which is not shown, and the second shaft portion 67 is inserted through the through hole.

As shown in Fig. 3, a second movable member 54 is fixedly attached to the lower side of the output portion 53C of the first movable member 53. As shown in Fig. 5, the second movable member 54 extends toward the I side in the vehicle width direction and is substantially shaped like a rectangular plate. The H-side end portion of the second movable member 54 in the vehicle width direction has a through hole provided therein, which is not shown, and the second shaft portion 67 is inserted through the through hole. The I-side end portion of the second movable member 54 in the vehicle width direction has a through hole provided therein, which is not shown, and the third shaft portion 68 is inserted through the through hole. The second movable member 54 is thus supported on the second and third shaft portions 67 and 68 and movable in the vehicle top-bottom direction together with the first movable member 53.

As shown in Fig. 5, the second movable member 54 has a groove portion 54A extending therethrough in the vehicle front-rear direction. The groove portion 54A extends from the H-side end of the second movable member 54 in the vehicle width direction to the vicinity of the I-side end of the second movable member 54 in the vehicle width direction. Accordingly, the groove portion 54A is a slot having a larger size in the vehicle width direction than in the vehicle top-bottom direction.

As shown in Fig. 4, the first shaft portion 66 has a retaining portion 63 supported thereon, which is movable in the vehicle top-bottom direction. The retaining portion 63 is substantially U shaped and open toward the H side in the vehicle width direction, and the respective ends of the U-shaped retaining portion 63 are supported on the first shaft portion 66. As shown in Fig. 3, a first one of the ends of the U-shaped retaining portion 63 is supported on the first shaft portion 66 while being positioned above the input portion 53B of the first movable member 53 and below the first stopper 66A. A second one of the ends of the U-shaped retaining portion 63 is supported on the first shaft portion 66 while being positioned below the input portion 53B of the first movable member 53. Between the first end of the U-shaped retaining portion 63 and the input portion 53B of the first movable member 53, an absorption spring 62 is provided to urge the first movable member 53 in the vehicle top-bottom direction. The absorption spring 62 is supported on the first shaft portion 66 while being elastically compressed between the first end of the U-shaped retaining portion 63 and the input portion 53B of the first movable member 53 and extends from the first end of the retaining portion 63 and urges the input portion 53B of the first movable member 53 downward in the vehicle top-bottom direction. The maximum elastic deformation of the absorption spring 62 in the vehicle top-bottom direction is greater than the maximum movement of the movable member 52 in the vehicle top-bottom direction. Here, the maximum movement of the movable member 52 denotes the movable range in the vehicle top-bottom direction within which the movable member 52, which is supported on the first, second and third shaft portions 66, 67 and 68, can move. The absorption spring 62 corresponds to a second elastic member interposed between the transmitting portion 51 and the movable member 52.

As shown in Fig. 4, a transmitting portion 51 is fixedly attached on the I side portion of the retaining portion 63 in the vehicle width direction, and the transmitting portion 51 converts the linear movement of the output shaft 13 into movement in the vehicle top-bottom direction when acted upon by the linear movement. The transmitting portion 51 is substantially shaped like a triangular prism such that it is upwardly tapered in the vehicle top-bottom direction. Specifically, as shown in Fig. 4, when seen in the vehicle front-rear direction, the transmitting portion 51 is shaped like a right-angled triangle and an inclined surface 51A of the transmitting portion 51 faces the output shaft 13, and an acute angle X formed between the central axis of the output shaft 13 and the inclined surface 51A of the transmitting portion 51 is approximately 70 degrees. In other words, the acute angle formed between the linear movement direction of the output shaft 13 and the inclined surface 51A of the transmitting portion 51 is greater than 45 degrees. The inclined surface 51A of the transmitting portion 51 is a flat surface. The inclined surface 51A of the transmitting portion 51 is inclined such that the linear movement of the output shaft 13 is converted into the movement in the vehicle top-bottom direction.

As shown in Fig. 3, the second shaft portion 67 has a return spring 61 supported thereon, which is configured to apply an urging force in the vehicle top-bottom direction. The return spring 61 is elastically compressed between the bottom-side end of the second movable member 54 and the second bottom-side stopper 67B to extend from the second bottom-side stopper 67B and urge the second movable member 54 upward. The return spring 61 corresponds to a first elastic member for urging the movable member 52 in a direction opposite to a direction in which the movable member 52 is movable when acted upon by the linear movement of the output shaft 13.

In the vehicle top-bottom direction, the bottom-side portion of the absorption spring 62 overlaps the top-side portion of the return spring 61. The absorption spring 62 and return spring 61 both touch the movable member 52 and are coupled together via the movable member 52. Accordingly, the absorption spring 62 and return spring 61 are coupled together via the movable member 52 such that they are arranged in parallel and partly overlap each other in the vehicle top-bottom direction.

Of the movable member 52, the second movable member 54 is coupled to a coupling portion 55, which couples together the gap adjusting mechanism 70 and the movable member 52. The coupling portion 55 transmits a force to the gap adjusting mechanism 70 as the movable member 52 moves. The coupling portion 55 includes a rod member 56 substantially shaped like a quadrangular prism, which is inserted into the groove portion 54A in the second movable member 54. The size of the rod member 56 in the vehicle top-bottom direction is substantially equal to the size of the groove portion 54A in the vehicle top-bottom direction. In other words, the rod member 56 is incapable of moving relative to the second movable member 54 in the vehicle top-bottom direction and thus moves in the vehicle top-bottom direction together with the second movable member 54 as the second movable member 54 moves in the vehicle top-bottom direction. The size of the rod member 56 in the vehicle width direction is to a degree less than the size of the groove portion 54A in the vehicle width direction. In other words, the difference in size in the vehicle width direction between the rod member 56 and the groove portion 54A is greater than the difference in size in the vehicle top-bottom direction between the rod member 56 and the groove portion 54A. Accordingly, the gap created between the outer surface of the rod member 56 and the inner surface of the groove portion 54A in the vehicle width direction enables the rod member 56 to move relative to the second movable member 54 in the vehicle width direction. Furthermore, the rod member 56 is inserted into the grove portion 54A extending in the vehicle front-rear direction, so that the rod member 56 is movable relative to the second movable member 54 in the vehicle front-rear direction. The groove portion 54A corresponds to an insertion groove depressed in the vehicle front-rear direction orthogonal to the vehicle top-bottom direction, and the rod member 56 is supported in the insertion groove such that the rod member 56 is movable in the vehicle front-rear direction.

As shown in Fig. 5, the K-side end of the rod member 56 in the vehicle front-rear direction has a limiting pin 57 fixedly attached thereto, which extends in the vehicle top-bottom direction. The size of the limiting pin 57 in the vehicle top-bottom direction is greater than the size of the groove portion 54A in the vehicle top-bottom direction, so that the limiting pin 57 prevents the rod member 56 from slipping out of the groove portion 54A.

As shown in Fig. 3, the J-side end of the rod member 56 in the vehicle front-rear direction has a supporting portion 58 fixedly attached thereto, which is coupled to the input member 73 of the gap adjusting mechanism 70. The supporting portion 58 is supported on the second housing 77 of the gap adjusting mechanism 70 via a guide plate 59 fixedly attached onto the second housing 77 of the gap adjusting mechanism 70. The guide plate 59 is shaped like a quadrangular plate as a whole and has an elongated hole 59A formed therein, which is a through hole and long in the vehicle top-bottom direction. The supporting portion 58 is inserted into the elongated hole 59A in the guide plate 59, so that the guide plate 59 supports the supporting portion 58 in a movable manner in the vehicle top-bottom direction. Accordingly, as the rod member 56 moves in the vehicle top-bottom direction, the supporting portion 58 moves in the vehicle top-bottom direction together with the rod member 56. As the supporting portion 58 moves in the vehicle top-bottom direction, a force acting in the vehicle top-bottom direction is transmitted to the input member 73 of the gap adjusting mechanism 70. The supporting portion 58 rotatably supports the rod member 56 via a supporting pin 58A extending in the vehicle top-bottom direction. Accordingly, the rod member 56 is rotatable about the coupling portion through which the J-side end of the rod member 56 in the vehicle front-rear direction is coupled with the supporting pin 58A.

Note that, in the brake device 10 described above, the vehicle top-bottom direction is referred to as a rotational axis direction as mentioned above. The vehicle width direction is one of the directions orthogonal to the vehicle top-bottom direction or rotational axis direction and corresponds to a first orthogonal direction as the base end portions of the rotating arms 40 are coupled to each other in the vehicle width direction via the gap adjusting mechanism 70. Furthermore, the vehicle front-rear direction is orthogonal to the first orthogonal direction and the rotational axis direction and thus corresponds to a second orthogonal direction.

The following describes how the brake device 10 operates. While the railroad vehicle is in motion, the compressed air is introduced into the space 21E of the internal space within the second cylinder 21, which is positioned on the H side in the vehicle width direction relative to the second piston 22. With the compressed air introduced into the space 21E in this way, the second piston 22 and drive shaft 23 overcome the urging force applied by the second spring 24 and move toward the I side in the vehicle width direction, so that the driving force applied by the drive shaft 23 resulting from the urging force produced by the second spring 24 is not transmitted to the output shaft 13. Accordingly, assuming that the drive force from the drive shaft 23 is not transmitted to the output shaft 13, the following describes how the brake device 10 operates.

When the compressed air is introduced into the space 11E within the inner space of the first cylinder 11, which is positioned on the I side in the vehicle width direction relative to the first piston 12, the first piston 12 and the output shaft 13 overcome the urging force produced by the first spring 14 and move linearly toward the H side in the vehicle width direction, as shown in Fig. 2. This brings the I-side portion of the inner peripheral surface of the insertion hole 13A in the output shaft 13 in the vehicle width direction into contact with the roller 33 of the rotating lever 30. The roller 33 of the rotating lever 30 then moves toward the H side in the vehicle width direction while the roller 33 remains touching the I-side portion of the inner peripheral surface of the insertion hole 13A in the output shaft 13 in the vehicle width direction but the touching portion of the roller 33 gradually changes. As the roller 33 moves in this manner, the rotating lever 30 rotates about the rotation center P1 in one direction, or clockwise as viewed in Fig. 2. Here, the coupling portion between the rotating arm 40A, which is positioned on the H side in the vehicle width direction, and the rotating lever 30 also rotates about the rotation center P1 clockwise. Accordingly, the rotating arm 40A receives a force directed toward the I side in the vehicle width direction at the coupling portion between the rotating arm 40A and the rotating lever 30. As a result, the rotating arm 40A moves toward the I side in the vehicle width direction. This in turn moves the attaching portion 45 and brake pad 90 coupled with the rotating arm 40A toward the disc 95, so that the brake pad 90 on the rotating arm 40A comes into contact with the end surface of the disc 95.

In addition, as described above, as the rotating arm 40A moves toward the I side in the vehicle width direction, the gap adjusting mechanism 70 also moves toward the I side in the vehicle width direction. Also, the coupling portion between the base end portion of the rotating arm 40B and the gap adjusting mechanism 70 moves toward the I side in the vehicle width direction. Here, at substantially the middle portion of the rotating arm 40B in the extension direction thereof, the rotating arm 40B is rotatably coupled with the caliper body 86A. Therefore, the rotating arm 40B rotates counterclockwise about the coupling portion between the rotating arm 40B and the caliper body 86A. This in turn moves the attaching portion 45 and brake pad 90 coupled with the rotating arm 40B toward the disc 95, so that the brake pad 90 on the rotating arm 40B comes into contact with the end surface of the disc 95. As a result, the disc 95 is sandwiched in the vehicle width direction between the brake pad 90 on the rotating arm 40A and the brake pad 90 on the rotating arm 40B, so that the rotation is braked.

On the other hand, when no compressed air is introduced into the space 11E within the inner space of the first cylinder 11, which is positioned on the I side in the vehicle width direction relative to the first piston 12 and the pressure in this space drops, the urging force produced by the first spring 14 causes the first piston 12 and output shaft 13 to linearly move toward the I side in the vehicle width direction. Then, the H-side portion of the inner peripheral surface of the insertion hole 13A in the output shaft 13 in the vehicle width direction touches the roller 33 of the rotating lever 30. The roller 33 of the rotating lever 30 moves toward the I side in the vehicle width direction while the roller 33 remains touching the H-side portion of the inner peripheral surface of the insertion hole 13A in the output shaft 13 in the vehicle width direction but the touching portion of the roller 33 gradually changes. As the roller 33 moves in this manner, the rotating lever 30 rotates about the rotation center P1 in the other direction, or counterclockwise as viewed in Fig. 2. Here, the coupling portion between the rotating arm 40A and the rotating lever 30 also rotates counterclockwise about the rotation center P1. Accordingly, the rotating arm 40A receives a force directed toward the H side in the vehicle width direction at the coupling portion between the rotating arm 40A and the rotating lever 30. As a result, the rotating arm 40A moves toward the H side in the vehicle width direction. This in turn moves the attaching portion 45 and brake pad 90 coupled with the rotating arm 40A away from the disc 95, so that the brake pad 90 on the rotating arm 40A separates from the end surface of the disc 95.

In addition, as described above, as the rotating arm 40A moves toward the H side in the vehicle width direction, the gap adjusting mechanism 70 also moves toward the H side in the vehicle width direction. Also, the coupling portion between the base end portion of the rotating arm 40B and the gap adjusting mechanism 70 moves toward the H side in the vehicle width direction. Therefore, the rotating arm 40B rotates clockwise about the coupling portion between the rotating arm 40B and the caliper body 86A. This in turn moves the attaching portion 45 and the brake pad 90 coupled with the rotating arm 40B away from the disc 95, so that the brake pad 90 on the rotating arm 40B separates from the end surface of the disc 95.

Once the brake pad 90 comes into contact with the disc 95, the friction between the rotating disc 95 and the brake pad 90 gradually wears the brake pad 90 off. As the brake pad 90 wears out in this manner, the distance between the brake pad 90 and the disc 95 observed when the output shaft 13 is positioned the furthest on the I side in the vehicle width direction increases. This in turn increases the distance by which the output shaft 13 needs to linearly move in order to move the brake pad 90 from a position away from the disc 95 to a position where the brake pad 90 can touch the disc 95. If the output shaft 13 moves by a predetermined distance or more, the rotational body 13B provided on the output shaft 13 touches the inclined surface 51A of the transmitting portion 51 as shown in Fig. 4. If the output shaft 13 attempts to move toward the H side in the vehicle width direction while the rotational body 13B provided on the output shaft 13 is in contact with the inclined surface 51A of the transmitting portion 51, the transmitting portion 51 moves downward in the vehicle top-bottom direction while the transmitting portion 51 remains touching the rotational body 13B on the output shaft 13 but the touching portion of the transmitting portion 51 gradually changes. Stated differently, the force acting in the direction of the linear movement made by the output shaft 13 is converted into a force acting in the rotational axis direction extending along the rotational axis of the rotating arms 40. If such a downward force in the vehicle top-bottom direction is transmitted to the first movable member 53 of the movable member 52 via the retaining portion 63 and the absorption spring 62, the first and second movable members 53 and 54 move downward in the vehicle top-bottom direction. The rod member 56 of the coupling portion 55, which is inserted in the groove portion 54A in the second movable member 54, moves downward in the vehicle top-bottom direction together with the second movable member 54. Along with the rod member 56, the supporting portion 58 also moves downward in the vehicle top-bottom direction. As the supporting portion 58 moves downward in the vehicle top-bottom direction, the downward force in the vehicle top-bottom direction is transmitted to the input member 73 of the gap adjusting mechanism 70. This causes the input member 73 to rotate in one direction circumferentially, in other words, counterclockwise in Fig. 3. As a result, a force is transmitted from the input member 73 via the one-way clutch 74 to the female screw portion 72, so that the female screw portion 72 rotates counterclockwise together with the input member 73. Since the female screw portion 72 rotates relative to the male screw portion 71 counterclockwise, this adjusts the distance between the base end portions of the rotating arms 40 such that the distance becomes long. As a result, the rotating arm 40A rotates in one direction circumferentially about the rotation center P2 of the rotating arm 40A, in other words, clockwise in Fig. 2. The rotating arm 40B, on the other hand, rotates in the other direction circumferentially about the coupling portion between the rotating arm 40B and the caliper body 86A, in other words, counterclockwise in Fig. 2. As the rotating arms 40 rotate in this way, the distance between the tip end portions of the rotating arms 40 can be adjusted such that the distance becomes short.

On the other hand, if the output shaft 13 moves toward the I side in the vehicle width direction such that the rotational body 13B on the output shaft 13 moves away from the inclined surface 51A of the transmitting portion 51, the urging force produced by the return spring 61 moves the first and second movable members 53 and 54 of the movable member 52 upward in the vehicle top-bottom direction. The rod member 56 of the coupling portion 55, which is inserted in the groove portion 54A in the second movable member 54, moves upward in the vehicle top-bottom direction together with the second movable member 54. Along with the rod member 56, the supporting portion 58 also moves upward in the vehicle top-bottom direction. As the supporting portion 58 moves upward in the vehicle top-bottom direction, the upward force in the vehicle top-bottom direction is transmitted to the input member 73 of the gap adjusting mechanism 70. This causes the input member 73 to rotate in the other direction circumferentially, in other words, clockwise in Fig. 3. When the input member 73 attempts to rotate clockwise, no force is transmitted from the input member 73 via the one-way clutch 74 to the female screw portion 72, as a result of which the female screw portion 72 is prevented from rotating clockwise. This means that the force causing the female screw portion 72 to rotate relative to the male screw portion 71 clockwise is not transmitted via the one-way clutch 74.

If the urging force produced by the return spring 61 moves the first and second movable members 53 and 54 of the movable member 52 upward in the vehicle top-bottom direction, the upward force in the vehicle top-bottom direction is transmitted to the transmitting portion 51 via the retaining portion 63 and absorption spring 62, so that the transmitting portion 51 moves upward to go back to the original position.

Advantageous effects of the embodiment will be now described.
(1) In the brake device 10, the gap adjusting mechanism 70 adjusts the distance between the base end portions of the rotating arms 40, and the rotating arm 40A rotates in one direction circumferentially about the rotation center P2 of the rotating arm 40A, in other words, clockwise in Fig. 2. If the rotating arm 40A rotates in this manner, this changes the relative positions of the rotating arm 40A and the gap adjusting mechanism 70 coupled to the base end portion of the rotating arm 40A. Specifically, the input member 73 of the gap adjusting mechanism 70 is positioned differently in the vehicle width direction or vehicle front-rear direction. In a case where the force fed from the output shaft 13 is transmitted to the gap adjusting mechanism 70 in the form of a force acting in the vehicle width direction or vehicle front-rear direction, the female screw portion 72 of the gap adjusting mechanism 70 rotates less than necessary even if the output shaft 13 moves by a predetermined distance or more and the force fed from the output shaft 13 is thus transmitted to the gap adjusting mechanism 70. If the female screw portion 72 of the gap adjusting mechanism 70 rotates less than expected, the gap adjusting mechanism 70 may possibly not be able to adjust the gap sufficiently and reliably.
   Here, the relative positions of the gap adjusting mechanism 70 and the converting portion 50 in the rotational axis direction remain unchanged even if the rotating arm 40A rotates and this causes a change in the relative positions of the rotating arm 40A and the gap adjusting mechanism 70. In the brake device 10, the converting portion 50 receives the force in the direction of the linear movement made by the output shaft 13, in other words, the force fed from the output shaft 13 in the vehicle width direction and transmits to the gap adjusting mechanism 70 the force acting in the rotational axis direction extending along the rotational axis of the rotating arms 40. In other words, the force transmitted from the converting portion 50 to the gap adjusting mechanism 70 acts in the vehicle top-bottom direction, which is the rotational axis direction. For this reason, the female screw portion 72 of the gap adjusting mechanism 70 is saved from rotating less than expected and the female screw portion 72 rotates by a predetermined value or more, if the output shaft 13 moves by a predetermined distance or more and the force fed from the output shaft 13 is thus transmitted to the gap adjusting mechanism 70. As a result, the adjustment can be reliably made by the gap adjusting mechanism 70 for the gap even if the rotating arm 40A rotates and this may change the relative positions of the rotating arm 40A and the gap adjusting mechanism 70.
(2) In the brake deice 10, the rotational body 13B of the output shaft 13 touches the inclined surface 51A of the transmitting portion 51, as a result of which the force directed toward the H side in the vehicle width direction fed from the output shaft 13 is converted into a downward force in the vehicle top-bottom direction. Accordingly, the brake device 10 can convert the linear movement made by the output shaft 13 into the force acting in the vehicle top-bottom direction simply by bringing the rotational body 13B of the output shaft 13 into contact with the inclined surface 51A of the transmitting portion 51.
(3) As shown in Fig. 4, the acute angle formed between the linear movement direction of the output shaft 13 and the inclined surface 51A of the transmitting portion 51 is greater than 45 degrees. With such a design, when the output shaft 13 transmits the force to the converting portion 50, the downward movement made by the transmitting portion 51 in the vehicle top-bottom direction when acted upon by the force fed from the output shaft 13 exceeds the movement toward the H side in the vehicle width direction made by the output shaft 13 after the rotational body 13B of the output shaft 13 starts touching the inclined surface 51A of the transmitting portion 51. In this manner, the movable member 52 and the coupling portion 55, which receive the force transmitted from the transmitting portion 51, can be configured to move by a long distance in the vehicle top-bottom direction even if the output shaft 13 is allowed to move only by a relatively short distance. In other words, the present embodiment facilitates sufficient movement of the movable member 52 and the coupling portion 55 to rotate the input member 73 of the gap adjusting mechanism 70.
(4) In the brake device 10, the rotational body 13B, which is supported rotatably, is configured to touch the inclined surface 51A of the transmitting portion 51. Accordingly, when the output shaft 13 attempts to move toward the H side in the vehicle width direction with the rotational body 13B of the output shaft 13 being in contact with the inclined surface 51A of the transmitting portion 51, the rotational body 13B of the output shaft 13 remains rotating while the touching position of the inclined surface 51A of the transmitting portion 51 changes. Such a design can reduce the resistance generated when the touching position of the inclined surface 51A of the transmitting portion 51 where the rotational body 13B of the output shaft 13 is in contact changes.
(5) In the brake device 10, as the rotating arm 40A rotates, the gap adjusting mechanism 70 is positioned differently relative to the output shaft 13 in the vehicle width direction or vehicle front-rear direction, but the input member 73 of the gap adjusting mechanism 70 is also positioned differently relative to the movable member 52 in the vehicle width direction or vehicle front-rear direction. Although movable in the vehicle top-bottom direction, the movable member 52 is not movable in the vehicle width direction or vehicle front-rear direction.
   To address this issue, of the movable member 52 in the brake device 10, the second movable member 54 is coupled to the coupling portion 55 configured to transmit a force to the gap adjusting mechanism 70 as the movable member 52 moves. In the groove portion 54A extending in the vehicle front-rear direction and provided in the second movable member 54, the rod member 56 of the coupling portion 55 is inserted. The rod member 56 of the coupling portion 55 moves within the groove portion 54A in the second movable member 54 in the axial direction of the rod member 56, specifically, generally in the vehicle front-rear direction, so that the coupling portion 55 is movable relative to the movable member 52 in the vehicle front-rear direction, which is orthogonal to the vehicle top-bottom direction. With such a design, even if the rotation of the rotating arm 40A results in the gap adjusting mechanism 70 moving in the vehicle front-rear direction, which is orthogonal to the vehicle top-bottom direction, such movement of the gap adjusting mechanism 70 is allowed and the force fed from the output shaft 13 can be still transmitted to the gap adjusting mechanism 70.
(6) The size of the groove portion 54A in the second movable member 54 in the vehicle width direction is to a degree greater than the size of the rod member 56 in the vehicle width direction. Accordingly, the rod member 56 of the coupling portion 55 is movable within the groove portion 54A in the second movable member 54 not only in the vehicle front-rear direction but also in the vehicle width direction. As a result, the coupling portion 55 can follow the change in the position of the gap adjusting mechanism 70 within the plane orthogonal to the vehicle top-bottom direction.
(7) In the brake device 10, the return spring 61 in the converting portion 50 urges the second movable member 54 of the movable member 52 upward in the vehicle top-bottom direction. Therefore, if the output shaft 13 moves toward the I side in the vehicle width direction such that the output shaft 13 moves away from the inclined surface 51A of the transmitting portion 51, the urging force produced by the return spring 61 in the converting portion 50 moves the first and second movable members 53 and 54 of the movable member 52 upward in the vehicle top-bottom direction. Stated differently, the first and second movable members 53 and 54 move such that they go back to their original positions where they are positioned before the force fed from the output shaft 13 is transmitted to the first and second movable member 53 and 54. This allows the urging force produced by the return spring 61 to move the movable member 52 back to the original position where it is positioned before the force fed from the output shaft 13 is transmitted.
(8) As the output shaft 13 linearly moves, the transmitting portion 51 and the movable member 52 move downward in the vehicle top-bottom direction. If the movable member 52 moves to the lower furthest position in the vehicle top-bottom direction and can no longer move any further, a force may be still applied from the output shaft 13 to the transmitting portion 51. Specifically, when the movable member 52 has moved to the lower furthest position in the vehicle top-bottom direction and can no longer move any further, the output shaft 13 further attempts to move toward the H side in the vehicle width direction unless the brake pad 90 abuts the disc 95. If the output shaft 13 moves toward the H side in the vehicle width direction, the transmitting portion 51 attempts to move downward in the vehicle top-bottom direction. Here, a case is assumed where the absorption spring 62 is not provided. In this case, if the movable member 52 moves to the lower furthest position in the vehicle top-bottom direction and can no longer move any further, the movement of the output shaft 13 toward the H side in the vehicle width direction may apply a high force to the transmitting portion 51, which is positioned between the output shaft 13 and the movable member 52. To address this issue, the brake device 10 has the absorption spring 62 interposed between the transmitting portion 51 and the first movable member 53 of the movable member 52. In addition, in the brake device 10, the maximum elastic deformation of the absorption spring 62 in the vehicle top-bottom direction is greater than the maximum movement of the movable member 52 in the vehicle top-bottom direction. Therefore, even if the movable member 52 moves to the lower furthest position in the vehicle top-bottom direction and can no longer move any further, the absorption spring 62 can still elastically deform. A force may be applied from the output shaft 13 to the transmitting portion 51, which is positioned between the output shaft 13 and the movable member 52, when the output shaft 13 further attempts to move toward the H side in the vehicle width direction even after the movable member 52 can no longer move downward in the vehicle top-bottom direction. According to the present embodiment, this force can be absorbed by the absorption spring 62, which is interposed between the transmitting portion 51 and the first movable member 53. Accordingly, the present embodiment can prevent an excessively high force from acting on the transmitting portion 51 and also prevent such a high force from plastically deforming the transmitting portion 51.
(9) In the brake device 10, the absorption spring 62 extending in the vehicle top-bottom direction is coupled with the return spring 61 extending in the vehicle top-bottom direction via the movable member 52. If the absorption spring 62 and return spring 61 are coupled together via the movable member 52 such that they are arranged in series, for example, the absorption spring 62 and return spring 61 are attached to the same first shaft portion 66, the converting portion 50 is likely to have a large size in the vehicle top-bottom direction. If the converting portion 50 has a large size in the vehicle top-bottom direction, the brake device 10 as a whole can have a large size in the vehicle top-bottom direction.
   To address this issue, in the brake device 10, the absorption spring 62 and return spring 61 are coupled together via the movable member 52 such that they are arranged in parallel and partly overlap each other in the vehicle top-bottom direction. Accordingly, while the brake device 10 includes two elastic members or the absorption spring 62 and return spring 61, the two elastic members can be arranged while the brake device 10 can achieve a small size in the vehicle top-bottom direction. When the two elastic members are employed, the converting portion 50 is likely to have a large size in the vehicle top-bottom direction and the brake device 10 as a whole can have a large size in the vehicle top-bottom direction. The present embodiment can prevent such a drawback.
(10) The gap adjusting mechanism 70 in the brake device 10 includes the externally threaded male screw portion 71 and the internally threaded female screw portion 72. The gap adjusting mechanism 70 adjusts the distance between the base end portions of the rotating arms 40 by allowing the movement in the vehicle top-bottom direction made by the converting portion 50 to rotate the female screw portion 72 relative to the male screw portion 71. Accordingly, the gap adjusting mechanism 70 can adjust the distance between the base end portions of the rotating arms 40 simply by rotating the female screw portion 72 relative to the male screw portion 71.
(11) In the brake device 10, if the output shaft 13 moves toward the I side in the vehicle width direction such that the output shaft 13 moves away from the inclined surface 51A of the transmitting portion 51, the urging force produced by the return spring 61 of the converting portion 50 moves the movable member 52 upward in the vehicle top-bottom direction. Without the one-way clutch 74, the upward movement of the movable member 52 in the vehicle top-bottom direction rotates the input member 73 in the other direction circumferentially, in other words, clockwise in Fig. 3, as a result of which the female screw portion 72 rotates clockwise relative to the male screw portion 71. As a result, the gap adjusting mechanism 70 decreases the distance between the base end portions of the rotating arms 40.

To address this issue, the present embodiment includes the one-way clutch 74. Accordingly, the upward movement of the movable member 52 in the vehicle top-bottom direction rotates the input member 73 in the other direction circumferentially, in other words, clockwise in Fig. 3, but no force is transmitted from the input member 73 to the female screw portion 72 via the one-way clutch 74. This means that the female screw portion 72 does not rotate relative to the male screw portion 71 clockwise. As a result, the embodiment can prevent the reduction in the distance between the base end portions of the rotating arms 40 even if the movable member 52 moves upward in the vehicle top-bottom direction.

The above embodiment can be modified as described below. The above embodiment and the following modifications can be implemented in combination to the extent where they are technically consistent with each other.

The above-described embodiment can be modified such that the gap adjusting mechanism 70 can be coupled to the pair of rotating arms 40 at different positions. For example, the first housing 76 of the gap adjusting mechanism 70 can be alternatively coupled to a portion of the rotating arm 40B that is positioned between (i) the base end portion and (ii) the coupling portion between the rotating arm 40B and the caliper body 86A. Likewise, the second housing 77 of the gap adjusting mechanism 70 can be coupled to the rotating arm 40A at different positions.

The above embodiment can be modified in terms of the design of the transmitting portion 51 of the converting portion 50. For example, the angle of the inclined surface 51A of the transmitting portion 51 can be modified. As a specific example, when seen in the vehicle front-rear direction, the acute angle X formed between the central axis of the output shaft 13 and the inclined surface 51A of the transmitting portion 51 may be 45 degrees or less than 45 degrees. With such a design, the movable member 52 and coupling portion 55 can be also reliably allowed to move sufficiently to rotate the input member 73 of the gap adjusting mechanism 70 as long as the output shaft 13 is movable toward the H side in the vehicle width direction by a sufficiently long distance after the rotational body 13B of the output shaft 13 starts touching the inclined surface 51A of the transmitting portion 51.

As an alternative example, the mechanism for converting the linear movement of the output shaft 13 is not limited to the transmitting portion 51. The transmitting portion 51 shaped like a triangular prism may be replaced with a cam or linkage mechanism for converting the force acting in the direction of the linear movement of the output shaft 13 into a force acting in the vehicle top-bottom direction.

The above embodiment can be modified in terms of the design of the movable member 52 and coupling portion 55 of the converting portion 50. For example, the groove portion 54A in the second movable member 54 of the movable member 52 does not need to extend through the second movable member 54. As a specific example, an alternative groove portion may be depressed from the J-side end surface of the second movable member 54 in the vehicle front-rear direction toward the K side in the vehicle front-rear direction. With such a design, the rod member 56 of the coupling portion 55 is still movable in the axial direction of the rod member 56 within the grove portion in the second movable member 54, as long as the rod member 56 of the coupling portion 55 is inserted into the grove portion in the second movable member 54.

As an alternative example, the size of the groove portion 54A in the second movable member 54 in the vehicle width direction may be substantially equal to the size of the rod member of the coupling portion 55 in the vehicle width direction. With such a design, the coupling portion 55 is still movable in the vehicle width direction relative to the movable member 52, as long as the rod member of the coupling portion 55 is elastically deformable in the vehicle width direction. As a specific example, a rod member shaped like a rectangular plate having a small thickness in the vehicle width direction can be employed.

As a further alternative example, the groove portion 54A does not need to extend through the second movable member 54 in the vehicle front-rear direction. As a specific example, the groove portion 54A may extend through the second movable member 54 in a direction forming a slight angle relative to the vehicle front-rear direction and rotated toward the vehicle width direction.

The above embodiment can be modified such that the return spring 61 may be positioned differently. For example, the return spring 61 may be arranged on the first shaft portion 66 while being compressed between the input member 53B of the first movable member 53 and the bottom-side end wall of the case 65. In this case, the return spring 61 extends from the bottom-side end wall of the case 65 and urges the first movable member 53 of the movable member 52 upward. Likewise, the return spring 61 may be attached to the third shaft portion 68. In order to reduce the size of the converting portion 50 in the vehicle top-bottom direction, the return spring 61 is preferably attached to the second or third shaft portion 67 or 68 such that the return spring 61 can be arranged in parallel with the absorption spring 62.

In the above embodiment, the movable member 52 may be returned to the original position by a member other than the return spring 61. For example, the tip end portion of the output shaft 13 is coupled with the transmitting portion 51 through a wire, and the wire may be wound around a pulley to change the direction of the force. With such a design, when the output shaft 13 moves toward the I side in the vehicle width direction such that the rotational body 13B of the output shaft 13 moves away from the inclined surface 51A of the transmitting portion 51, the force fed from the output shaft 13 is transmitted to the transmitting portion 51 via the wire. If the force produced by the output shaft 13 and acting toward the I side in the vehicle width direction is converted into an upward force in the vehicle top-bottom direction before being transmitted to the transmitting portion 51, the force produced by the output shaft 13 can move the transmitting portion 51 upward in the vehicle top-bottom direction.

The above embodiment may be modified such that the maximum elastic deformation of the absorption spring 62 in the vehicle top-bottom direction may be equal to or less than the maximum movement of the movable member 52 in the vehicle top-bottom direction. With such a design, as long as the absorption spring 62 is interposed between the transmitting portion 51 and the movable member 52, the elastic deformation of the absorption spring 62 can prevent the output shaft 13 from applying an excessive shock to the transmitting portion 51 when the output shaft 13 touches the transmitting portion 51. For the purpose of preventing the application of such a shock, the absorption spring 62 may be replaced with an elastic member made of rubber to serve as a second elastic member.

The above embodiment may be practiced without the absorption spring 62, so that the transmitting portion 51 and the movable member 52 are coupled together.

The above embodiment can be modified so that the first cylinder 11 may be positioned differently. For example, the central axis of the first cylinder 11 may extend in the vehicle front-rear direction, in other words, along the extending direction of the rotating arms 40. With such a design, the output shaft 13 linearly moves in the vehicle front-rear direction within the first cylinder 11. The force acting in the direction of the linear movement made by the output shaft 13 can be converted into the force acting in the vehicle top-bottom direction by positioning the transmitting portion 51 differently in accordance with the output shaft 13 linearly movable in the vehicle front-rear direction.

## Claims

1. A brake device (10) comprising:
an output shaft (13) linearly movable;
a pair of rotating arms (40), each rotating arm (40) having a friction member (90) fixedly attached to a tip end portion thereof, the rotating arms (40) being rotatable when acted upon by the linear movement of the output shaft (13);
a gap adjusting mechanism (70) coupled to base end portions of the rotating arms (40) that are positioned opposite to the tip end portions, each of the rotating arms (40) having a rotation center between the base and tip end portions thereof, the gap adjusting mechanism (70) being configured to adjust a distance between the base end portions of the rotating arms (40); and
a converting portion (50) for converting the linear movement of the output shaft (13) into movement in a rotational axis direction extending along a rotational axis of the rotating arms (40), wherein
the gap adjusting mechanism (70) increases the distance between the base end portions of the rotating arms (40) as the movement in the rotational axis direction is made, **characterized in that**
the converting portion (50) includes:
a movable member (52) movable in the rotational axis direction relative to the gap adjusting mechanism (70) when acted upon by the linear movement of the output shaft (13); and
a coupling portion (55) coupling together the movable member (52) and the gap adjusting mechanism (70), and
the coupling portion (55) is movable relative to the movable member (52) in a direction orthogonal to the rotational axis direction.

2. The brake device (10) according to claim 1, wherein
the coupling portion (55) includes a rod member (56) coupling together the movable member (52) and the gap adjusting mechanism (70), and
the movable member (52) has an insertion groove (54A) therein depressed in a direction orthogonal to the rotational axis direction, and the rod member (56) is supported in the insertion groove (54A) such that the rod member (56) is movable in the direction orthogonal to the rotational axis direction.

3. The brake device (10) according to claim 2, wherein
when the rotational axis direction is orthogonal to a plurality of directions including a first orthogonal direction and a second orthogonal direction, the first orthogonal direction denotes a direction extending along a straight line connecting together the base end portions of the rotating arms (40) to which the gap adjusting mechanism (70) is coupled and the second orthogonal direction denotes a direction orthogonal to the first orthogonal direction and the rotational axis direction,
the insertion groove (54A) is depressed in the second orthogonal direction and
a difference in size in the first orthogonal direction between the insertion groove (54A) and the rod member (56) is greater than a difference in size in the rotational axis direction between the insertion groove (54A) and the rod member (56).

4. The brake device (10) according to any one of claims 1 to 3, wherein
the converting portion (50) includes a first elastic member (61) for urging the movable member (52) in a direction opposite to a direction in which the movable member (52) is movable when acted upon by the linear movement of the output shaft (13).

5. The brake device (10) according to any one of claims 1 to 3, wherein
the converting portion (50) includes:
a transmitting portion (51) for converting, when acted upon by the linear movement of the output shaft (13), the linear movement into the movement in the rotational axis direction and transmitting the movement in the rotational axis direction to the movable member (52); and
a second elastic member (62) interposed between the transmitting portion (51) and the movable member (52).

6. The brake device (10) according to claim 5, wherein
maximum elastic deformation of the second elastic member (62) in the rotational axis direction is greater than maximum movement of the movable member (52) in the rotational axis direction.

7. The brake device (10) according to claim 5 or 6, wherein
the converting portion (50) includes a first elastic member (61) for urging the movable member (52) in a direction opposite to a direction in which the movable member (52) is movable when acted upon by the linear movement of the output shaft (13), and
the first and second elastic members (61, 62) are coupled together via the movable member (52) such that the first and second elastic members (61, 62) are arranged in parallel and at least partly overlap each other in the rotational axis direction.

8. The brake device (10) according to any one of claims 5 to 7, wherein
the transmitting portion (51) has an inclined surface (51A) inclined such that the linear movement of the output shaft (13) is converted into the movement in the rotational axis direction.

9. The brake device (10) according to claim 8, wherein
the inclined surface (51A) is a flat surface, and
when seen in a direction orthogonal to both of a direction of the linear movement of the output shaft (13) and the rotational axis direction, an acute angle formed between the direction of the linear movement of the output shaft (13) and the inclined surface (51A) is greater than 45 degrees.

10. The brake device (10) according to any one of claims 1 to 9, wherein
the gap adjusting mechanism (70) includes:
a male screw portion (71) provided between the base end portions of the rotating arms (40); and
a female screw portion (72) receiving the male screw portion (71) fitted therein, the female screw portion (72) being configured to increase the distance between the base end portions of the rotating arms (40) when the female screw portion (72) rotates in one direction circumferentially relative to the male screw portion (71), and
the female screw portion (72) rotates circumferentially relative to the male screw portion (71) when acted upon by movement in the rotational axis direction.

11. The brake device (10) according to claim 4, wherein
the gap adjusting mechanism (70) includes:
a male screw portion (71) provided between the base end portions of the rotating arms (40); and
a female screw portion (72) receiving the male screw portion (71) fitted therein, the female screw portion (72) being configured to increase the distance between the base end portions of the rotating arms (40) when the female screw portion (72) rotates in one direction circumferentially relative to the male screw portion (71),
the female screw portion (71) rotates circumferentially relative to the male screw portion (71) when acted upon by the movement in the rotational axis direction, and
the gap adjusting mechanism (70) further includes a one-way clutch (74) for (i), when the movable member (52) moves toward one side in the rotational axis direction, allowing transmission of a force enabling the female screw portion (72) to rotate relative to the male screw portion (71) in one direction circumferentially and (ii), when the movable member (52) moves toward the other side in the rotational axis direction, prohibiting transmission of a force enabling the female screw portion (72) to rotate relative to the male screw portion (71) in the other direction circumferentially.

12. A brake device (10) according to claim 1,
wherein the converting portion (50) includes:
a first elastic member (61) for urging the movable member (52) in a direction opposite to a direction in which the movable member (52) is movable when acted upon by the linear movement of the output shaft (13);
a transmitting portion (51) for converting, when acted upon by the linear movement of the output shaft (13), the linear movement into the movement in the rotational axis direction, and transmitting the movement in the rotational axis direction to the movable member (52); and
a second elastic member (62) interposed between the transmitting portion (51) and the movable member (52),
the first and second elastic members (61, 62) are coupled together via the movable member (52) such that the first and second elastic members (61, 62) are arranged in parallel and at least partly overlap each other in the rotational axis direction,
the coupling portion (55) includes a rod member (56) coupling together the movable member (52) and the gap adjusting mechanism (70),
the movable member (52) has an insertion groove (54A) therein depressed in a direction orthogonal to the rotational axis direction, and the rod member (56) is supported in the insertion groove (54A) such that the rod member (56) is movable in the direction orthogonal to the rotational axis direction,
the gap adjusting mechanism (70) includes:
a male screw portion (71) provided between the base end portions of the rotating arms (40); and
a female screw portion (72) receiving the male screw portion (71) fitted therein, the female screw portion (72) being configured to increase the distance between the base end portions of the rotating arms (40) when the female screw portion (72) rotates in one direction circumferentially relative to the male screw portion (71),
the female screw portion (71) rotates circumferentially relative to the male screw portion (71) when acted upon by the movement in the rotational axis direction, and
the gap adjusting mechanism (70) further includes a one-way clutch (74) for (i), when the movable member (52) moves toward one side in the rotational axis direction, allowing transmission of a force enabling the female screw portion (72) to rotate relative to the male screw portion (71) in one direction circumferentially and (ii), when the movable member (52) moves toward the other side in the rotational axis direction, prohibiting transmission of a force enabling the female screw portion (72) to rotate relative to the male screw portion (71) in the other direction circumferentially.

## Patentansprüche

1. Eine Bremsvorrichtung (10), umfassend:
eine linear bewegliche Augangswelle (13);
ein Paar rotierender Arme (40), wobei jeder rotierende Arm (40) ein Reibungselement (90) aufweist, das fest an einem Spitzenendabschnitt davon angebracht ist, wobei die rotierenden Arme (40) drehbar sind, wenn auf sie die lineare Bewegung der Ausgangswelle (13) einwirkt;
einen Spalteinstellmechanismus (70), der mit Basisendabschnitten der rotierenden Arme (40) gekoppelt ist, die gegenüber den Spitzenendabschnitten positioniert sind, wobei jeder der rotierenden Arme (40) ein Rotationszentrum zwischen den Basis- und Spitzenendabschnitten davon aufweist, wobei der Spalteinstellmechanismus (70) konfiguriert ist, um einen Abstand zwischen den Basisendabschnitten der rotierenden Arme (40) einzustellen; und
einen Umwandlungsabschnitt (50) zum Umwandeln der linearen Bewegung der Ausgangswelle (13) in eine Bewegung in einer Rotationsachsenrichtung, die sich entlang einer Rotationsachse der rotierenden Arme (40) erstreckt, wobei
der Spalteinstellmechanismus (70) den Abstand zwischen den Basisendabschnitten der rotierenden Arme (40) vergrößert, wenn die Bewegung in der Rotationsachsenrichtung ausgeführt wird, **dadurch gekennzeichnet, dass**
der Umwandlungsabschnitt (50) umfasst:
ein bewegliches Element (52), das in der Rotationsachsenrichtung relativ zu dem Spalteinstellmechanismus (70) beweglich ist, wenn auf es die lineare Bewegung der Ausgangswelle (13) einwirkt, und
einen Kopplungsabschnitt (55), der das bewegliche Element (52) und den Spalteinstellmechanismus (70) miteinander koppelt, und
der Kupplungsabschnitt (55) relativ zu dem beweglichen Element (52) in einer Richtung orthogonal zu der Rotationsachsenrichtung beweglich ist.

2. Die Die Bremsvorrichtung (10) nach Anspruch 1, wobei
der Kupplungsabschnitt (55) ein Stangenelement (56) enthält, das das bewegliche Element (52) und den Spalteinstellmechanismus (70) miteinander koppelt, und
das bewegliche Element (52) eine Einsetznut (54A) darin aufweist, die in einer Richtung orthogonal zur Rotationsachsenrichtung eingedrückt ist, und das Stangenelement (56) in der Einsetznut (54A) so gelagert ist, dass das Stangenelement (56) in der Richtung orthogonal zur Rotationsachsenrichtung beweglich ist.

3. Die Bremsvorrichtung (10) nach Anspruch 2, wobei
wenn die Rotationsachsenrichtung orthogonal zu einer Vielzahl von Richtungen ist, die eine erste orthogonale Richtung und eine zweite orthogonale Richtung enthalten, die erste orthogonale Richtung eine Richtung bezeichnet, die sich entlang einer geraden Linie erstreckt, die die Basisendabschnitte der rotierenden Arme (40) miteinander verbindet, mit denen der Spaltnachstellmechanismus (70) gekoppelt ist, und die zweite orthogonale Richtung eine Richtung bezeichnet, die orthogonal zu der ersten orthogonalen Richtung und der Rotationsachsenrichtung ist,
die Einsetznut (54A) in der zweiten orthogonalen Richtung eingedrückt ist und
ein Größenunterschied in der ersten orthogonalen Richtung zwischen der Einsetznut (54A) und dem Stabelement (56) größer ist als ein Größenunterschied in der Rotationsachsenrichtung zwischen der Einsetznut (54A) und dem Stabelement (56).

4. Die Bremsvorrichtung (10) nach irgendeinem der Ansprüche 1 bis 3, wobei
der Umwandlungsabschnitt (50) ein erstes elastisches Element (61) enthält, um das bewegliche Element (52) in eine Richtung zu drängen, die einer Richtung entgegengesetzt ist, in der das bewegliche Element (52) beweglich ist, wenn auf es die lineare Bewegung der Ausgangswelle (13) einwirkt.

5. Die Bremsvorrichtung (10) nach irgendeinem der Ansprüche 1 bis 3, wobei
der Umwandlungsabschnitt (50) enthält:
einen Übertragungsabschnitt (51) zum Umwandeln der linearen Bewegung in die Bewegung in die Rotationsachsenrichtung, wenn auf ihn die lineare Bewegung der Ausgangswelle (13) einwirkt, und zum Übertragen der Bewegung in die Rotationsachsenrichtung auf das bewegliche Element (52); und
ein zweites elastisches Element (62), das zwischen dem Übertragungsabschnitt (51) und dem beweglichen Element (52) angeordnet ist.

6. Die Bremsvorrichtung (10) nach Anspruch 5, wobei
die maximale elastische Verformung des zweiten elastischen Elements (62) in der Rotationsachsenrichtung größer ist als die maximale Bewegung des beweglichen Elements (52) in der Rotationsachsenrichtung.

7. Die Bremsvorrichtung (10) nach Anspruch 5 oder 6, wobei
der Umwandlungsabschnitt (50) ein erstes elastisches Element (61), um das bewegliche Element (52) in eine Richtung zu drängen, die einer Richtung entgegengesetzt ist, in der das bewegliche Element (52) beweglich ist, wenn auf es die lineare Bewegung der Ausgangswelle (13) einwirkt, und
das erste und das zweite elastische Element (61, 62) über das bewegliche Element (52) so miteinander gekoppelt sind, dass das erste und das zweite elastische Element (61, 62) parallel angeordnet sind und einander in der Rotationsachsenrichtung zumindest teilweise überlappen.

8. Die Bremsvorrichtung (10) nach irgendeinem der Ansprüche 5 bis 7, wobei
der Übertragungsabschnitt (51) eine geneigte Fläche (51A) aufweist, die so geneigt ist, dass die lineare Bewegung der Ausgangswelle (13) in die Bewegung in die Rotationsachsenrichtung umgewandelt wird.

9. Die Bremsvorrichtung (10) nach Anspruch 8, wobei
die geneigte Fläche (51A) eine ebene Fläche ist, und
ein spitzer Winkel, der zwischen der Richtung der linearen Bewegung der Ausgangswelle (13) und der geneigten Fläche (51A) gebildet wird, größer als 45 Grad ist, in einer Richtung orthogonal sowohl zur Richtung der linearen Bewegung der Ausgangswelle (13) als auch der Rotationsachsenrichtung gesehen.

10. Die Bremsvorrichtung (10) nach irgendeinem der Ansprüche 1 bis 9, wobei
der Spalteinstellmechanismus (70) enthält:
einen männlichen Schraubenabschnitt (71), der zwischen den Basisendabschnitten der rotierenden Arme (40) vorgesehen ist; und
einen weiblichen Schraubenabschnitt (72), der den darin eingepassten männlichen Schraubenabschnitt (71) aufnimmt, wobei der weibliche Schraubenabschnitt (72) so konfiguriert ist, dass er den Abstand zwischen den Basisendabschnitten der rotierenden Arme (40) vergrößert, wenn sich der weibliche Schraubenabschnitt (72) in einer Richtung in Umfangsrichtung relativ zu dem männlichen Schraubenabschnitt (71) dreht, und
der weibliche Schraubenabschnitt (72) sich in Umfangsrichtung relativ zu dem männlichen Schraubenabschnitt (71) dreht, wenn auf ihn eine Bewegung in Rotationsachsenrichtung einwirkt.

11. Die Bremsvorrichtung (10) nach Anspruch 4, wobei
der Spalteinstellmechanismus (70) enthält:
einen männlichen Schraubenabschnitt (71), der zwischen den Basisendabschnitten der rotierenden Arme (40) vorgesehen ist; und
einen weiblichen Schraubenabschnitt (72), der den darin eingepassten männlichen Schraubenabschnitt (71) aufnimmt, wobei der weibliche Schraubenabschnitt (72) so konfiguriert ist, dass er den Abstand zwischen den Basisendabschnitten der rotierenden Arme (40) vergrößert, wenn sich der weibliche Schraubenabschnitt (72) in einer Richtung in Umfangsrichtung relativ zu dem männlichen Schraubenabschnitt (71) dreht,
der weibliche Schraubenabschnitt (71) sich in Umfangsrichtung relativ zu dem männlichen Schraubenabschnitt (71) dreht, wenn die Bewegung in Rotationsachsenrichtung auf ihn einwirkt, und
der Spalteinstellmechanismus (70) ferner eine Einwegkupplung (74) enthält, um (i), wenn sich das bewegliche Element (52) in Richtung einer Seite in der Rotationsachsenrichtung bewegt, die Übertragung einer Kraft zu ermöglichen, die es dem weiblichen Schraubenabschnitt (72) ermöglicht, sich relativ zu dem männlichen Schraubenabschnitt (71) in einer Richtung in Umfangsrichtung zu drehen, und (ii), wenn sich das bewegliche Element (52) in Richtung der anderen Seite in Rotationsachsenrichtung bewegt, die Übertragung einer Kraft verhindert, die es dem weiblichen Schraubenabschnitt (72) ermöglicht, sich relativ zu dem männlichen Schraubenabschnitt (71) in der anderen Umfangsrichtung zu drehen.

12. Eine Bremsvorrichtung (10) nach Anspruch 1,
wobei der Umwandlungsabschnitt (50) enthält:
ein erstes elastisches Element (61), um das bewegliche Element (52) in eine Richtung zu drängen, die einer Richtung entgegengesetzt ist, in der das bewegliche Element (52) beweglich ist, wenn auf es die lineare Bewegung der Ausgangswelle (13) einwirkt;
einen Übertragungsabschnitt (51) zum Umwandeln der linearen Bewegung in die Bewegung in die Rotationsachsenrichtung, wenn auf ihn die lineare Bewegung der Ausgangswelle (13) einwirkt, und zum Übertragen der Bewegung in die Rotationsachsenrichtung auf das bewegliche Element (52); und
ein zweites elastisches Element (62), das zwischen dem Übertragungsabschnitt (51) und dem beweglichen Element (52) angeordnet ist; und
das erste und das zweite elastische Element (61, 62) über das bewegliche Element (52) so miteinander gekoppelt sind, dass das erste und das zweite elastische Element (61, 62) parallel zueinander angeordnet sind und einander in Rotationsachsenrichtung zumindest teilweise überlappen,
der Kupplungsabschnitt (55) ein Stangenelement (56) enthält, das das bewegliche Element (52) und den Spalteinstellmechanismus (70) miteinander koppelt,
das bewegliche Element (52) eine Einsetznut (54A) darin aufweist, die in einer Richtung orthogonal zur Rotationsachsenrichtung eingedrückt ist, und das Stangenelement (56) in der Einsetznut (54A) so gelagert ist, dass das Stangenelement (56) in der Richtung orthogonal zur Rotationsachsenrichtung beweglich ist,
der Spalteinstellmechanismus (70) enthält:
einen männlichen Schraubenabschnitt (71), der zwischen den Basisendabschnitten der rotierenden Arme (40) vorgesehen ist; und
einen weiblichen Schraubenabschnitt (72), der den darin eingepassten männlichen Schraubenabschnitt (71) aufnimmt, wobei der weibliche Schraubenabschnitt (72) so konfiguriert ist, dass er den Abstand zwischen den Basisendabschnitten der rotierenden Arme (40) vergrößert, wenn sich der weibliche Schraubenabschnitt (72) in einer Richtung in Umfangsrichtung relativ zu dem männlichen Schraubenabschnitt (71) dreht,
der weibliche Schraubenabschnitt (71) sich in Umfangsrichtung relativ zu dem männlichen Schraubenabschnitt (71) dreht, wenn die Bewegung in Rotationsachsenrichtung auf ihn einwirkt, und
der Spalteinstellmechanismus (70) ferner eine Einwegkupplung (74) enthält, um (i), wenn sich das bewegliche Element (52) in Richtung einer Seite in der Rotationsachsenrichtung bewegt, die Übertragung einer Kraft zu ermöglichen, die es dem weiblichen Schraubenabschnitt (72) ermöglicht, sich relativ zu dem männlichen Schraubenabschnitt (71) in einer Richtung in Umfangsrichtung zu drehen, und (ii), wenn sich das bewegliche Element (52) in Richtung der anderen Seite in Rotationsachsenrichtung bewegt, die Übertragung einer Kraft verhindert, die es dem weiblichen Schraubenabschnitt (72) ermöglicht, sich relativ zu dem männlichen Schraubenabschnitt (71) in der anderen Umfangsrichtung zu drehen.

## Revendications

1. Dispositif de frein (10) comprenant :
un axe de sortie (13) mobile linéairement ;
une paire de bras rotatifs (40), chaque bras rotatif (40) comportant un élément de friction (90) qui y est attaché de manière fixe à une portion d'extrémité de pointe, les bras rotatifs (40) étant rotatifs quand ils sont actionnés par un mouvement linéaire de l'axe de sortie (13) ;
un mécanisme d'ajustement d'intervalle (70) couplé à des portions d'extrémité de base des bras rotatifs (40) qui sont positionnées à l'opposé des portions d'extrémité de pointe, chacun des bras rotatifs (40) comportant un centre de rotation entre ses portions d'extrémité de base et de pointe, le mécanisme d'ajustement d'intervalle (70) étant configuré pour ajuster la distance entre les portions d'extrémité de base des bras rotatifs (40) ; et
une portion de conversion (50) pour convertir le mouvement linéaire de l'axe de sortie (13) en un mouvement en direction de l'axe de rotation qui s'étend le long d'un axe de rotation des bras rotatifs (40), dans lequel
le mécanisme d'ajustement d'intervalle (70) augmente la distance entre les portions d'extrémité de base des bras rotatifs (40) lorsque le mouvement en direction de l'axe de rotation est effectué,
**caractérisé en ce que**
la portion de conversion (50) comprend :
un élément mobile (52) qui est mobile en direction de l'axe de rotation par rapport au mécanisme d'ajustement d'intervalle (70) quand il est actionné par le mouvement linéaire de l'axe de sortie (13) ; et
une portion d'accouplement (55) qui couple entre eux l'élément mobile (52) et le mécanisme d'ajustement d'intervalle (70), et
la portion d'accouplement (55) est mobile par rapport à l'élément mobile (52) dans une direction orthogonale à la direction de l'axe de rotation.

2. Dispositif de frein (10) selon la revendication 1, dans lequel
la portion d'accouplement (55) comprend un élément de tige (56) qui couple entre eux l'élément mobile (52) et le mécanisme d'ajustement d'intervalle (70), et
l'élément mobile (52) comporte une rainure d'insertion (54A) qui y est renfoncée dans une direction orthogonale à la direction de l'axe de rotation, et l'élément de tige (56) est supporté dans la rainure d'insertion (54A) de telle sorte que l'élément de tige (56) est mobile dans la direction orthogonale à la direction de l'axe de rotation.

3. Dispositif de frein (10) selon la revendication 2, dans lequel
quand la direction de l'axe de rotation est orthogonale à une pluralité de directions, comprenant une première direction orthogonale et une deuxième direction orthogonale, la première direction orthogonale désigne une direction qui s'étend selon une ligne droite qui connecte entre elles les portions d'extrémité de base des bras rotatifs (40) auxquels est couplé le mécanisme d'ajustement d'intervalle (70), et la deuxième direction orthogonale désigne une direction orthogonale à la première direction orthogonale et à la direction de l'axe de rotation,
la rainure d'insertion (54A) est renfoncée dans la deuxième direction orthogonale, et
la différence de taille dans la première direction orthogonale entre la rainure d'insertion (54A) et l'élément de tige (56) est supérieure à la différence de taille en direction de l'axe de rotation entre la rainure d'insertion (54A) et l'élément de tige (56).

4. Dispositif de frein (10) selon l'une quelconque des revendications 1 à 3, dans lequel
la portion de conversion (50) comprend un premier élément élastique (61) pour contraindre l'élément mobile (52) dans une direction opposée à la direction dans laquelle l'élément mobile (52) est mobile lorsqu'il est actionné par le mouvement linéaire de l'axe de sortie (13).

5. Dispositif de frein (10) selon l'une quelconque des revendications 1 à 3, dans lequel
la portion de conversion (50) comprend :
une portion de transmission (51) pour convertir, lorsqu'elle est actionnée par le mouvement linéaire de l'axe de sortie (13), le mouvement linéaire en mouvement en direction de l'axe de rotation, et pour transmettre le mouvement en direction de l'axe de rotation à l'élément mobile (52) ; et
un deuxième élément élastique (62) interposé entre la portion de transmission (51) et l'élément mobile (52).

6. Dispositif de frein (10) selon la revendication 5, dans lequel
une déformation élastique maximale du deuxième élément élastique (62) en direction de l'axe de rotation est supérieure au mouvement maximal de l'élément mobile (52) en direction de l'axe de rotation.

7. Dispositif de frein (10) selon la revendication 5 ou 6, dans lequel
la portion de conversion (50) comprend un premier élément élastique (61) pour contraindre l'élément mobile (52) dans une direction opposée à la direction dans laquelle l'élément mobile (52) est mobile lorsqu'il est actionné par le mouvement linéaire de l'axe de sortie (13), et
les premier et deuxième éléments élastiques (61, 62) sont couplés entre eux via l'élément mobile (52) de telle sorte que les premier et deuxième éléments élastiques (61, 62) sont agencés en parallèle et se chevauchent au moins partiellement en direction de l'axe de rotation.

8. Dispositif de frein (10) selon l'une quelconque des revendications 5 à 7, dans lequel
la portion de transmission (51) comporte une surface inclinée (51A) qui est inclinée de telle sorte que le mouvement linéaire de l'axe de sortie (13) est converti en mouvement en direction de l'axe de rotation.

9. Dispositif de frein (10) selon la revendication 8, dans lequel
la surface inclinée (51A) est une surface plane, et
vu dans une direction orthogonale aussi bien à la direction du mouvement linéaire de l'axe de sortie (13) qu'à la direction de l'axe de rotation, un angle aigu formé entre la direction du mouvement linéaire de l'axe de sortie (13) et la surface inclinée (51A) est supérieur à 45 degrés.

10. Dispositif de frein (10) selon l'une quelconque des revendications 1 à 9, dans lequel
le mécanisme d'ajustement d'intervalle (70) comprend :
une portion de vis mâle (71) pourvue entre les portions d'extrémité de base des bras rotatifs (40) ; et
une portion de vis femelle (72) recevant la portion de vis mâle (71) qui y est insérée, la portion de vis femelle (72) étant configurée pour augmenter la distance entre les portions d'extrémité de base des bras rotatifs (40) quand la portion de vis femelle (72) tourne dans une direction circonférentiellement par rapport à la portion de vis mâle (71), et
la portion de vis femelle (72) tourne circonférentiellement par rapport à la portion de vis mâle (71) lorsqu'elle est actionnée par un mouvement en direction de l'axe de rotation.

11. Dispositif de frein (10) selon la revendication 4, dans lequel
le mécanisme d'ajustement d'intervalle (70) comprend :
une portion de vis mâle (71) pourvue entre les portions d'extrémité de base des bras rotatifs (40) ; et
une portion de vis femelle (72) recevant la portion de vis mâle (71) qui y est insérée, la portion de vis femelle (72) étant configurée pour augmenter la distance entre les portions d'extrémité de base des bras rotatifs (40) quand la portion de vis femelle (72) tourne dans une direction circonférentiellement par rapport à la portion de vis mâle (71),
la portion de vis femelle (71) tourne circonférentiellement par rapport à la portion de vis mâle (71) lorsqu'elle est actionnée par le mouvement en direction de l'axe de rotation, et
le mécanisme d'ajustement d'intervalle (70) comprend en outre un embrayage unidirectionnel (74) pour (i), quand l'élément mobile (52) se déplace vers un côté en direction de l'axe de rotation, permettre la transmission d'une force qui permet à la portion de vis femelle (72) de tourner par rapport à la portion de vis mâle (71) circonférentiellement dans une direction, et (ii), quand l'élément mobile (52) se déplace vers l'autre côté en direction de l'axe de rotation, empêcher la transmission d'une force qui permet à la portion de vis femelle (72) de tourner par rapport à la portion de vis mâle (71) circonférentiellement dans l'autre direction.

12. Dispositif de frein (10) selon la revendication 1, dans lequel
la portion de conversion (50) comprend :
un premier élément élastique (61) pour contraindre l'élément mobile (52) dans une direction opposée à la direction dans laquelle l'élément mobile (52) est mobile quand il est actionné par le mouvement linéaire de l'arbre de sortie (13) ;
une portion de transmission (51) pour convertir, lorsqu'elle est actionnée par le mouvement linéaire de l'axe de sortie (13), le mouvement linéaire en ledit mouvement en direction de l'axe de rotation, et pour transmettre le mouvement en direction de l'axe de rotation à l'élément mobile (52) ; et
un deuxième élément élastique (62) interposé entre la portion de transmission (51) et l'élément mobile (52) ,
les premier et deuxième éléments élastiques (61, 62) sont couplés entre eux via l'élément mobile (52) de telle sorte que les premier et deuxième éléments élastiques (61, 62) sont agencés en parallèle et se chevauchent au moins partiellement en direction de l'axe de rotation,
la portion d'accouplement (55) comprend un élément de tige (56) qui couple entre eux l'élément mobile (52) et le mécanisme d'ajustement d'intervalle (70),
l'élément mobile (52) comporte une rainure d'insertion (54A) qui y est renfoncée dans une direction orthogonale à la direction de l'axe de rotation, et l'élément de tige (56) est supporté dans la rainure d'insertion (54A) de telle sorte que l'élément de tige (56) est mobile dans la direction orthogonale à la direction de l'axe de rotation,
le mécanisme d'ajustement d'intervalle (70) comprend :
une portion de vis mâle (71) pourvue entre les portions d'extrémité de base des bras rotatifs (40) ; et
une portion de vis femelle (72) recevant la portion de vis mâle (71) qui y est insérée, la portion de vis femelle (72) étant configurée pour augmenter la distance entre les portions d'extrémité de base des bras rotatifs (40) quand la portion de vis femelle (72) tourne dans une direction circonférentiellement par rapport à la portion de vis mâle (71),
la portion de vis femelle (71) tourne circonférentiellement par rapport à la portion de vis mâle (71) lorsqu'elle est actionnée par le mouvement en direction de l'axe de rotation, et
le mécanisme d'ajustement d'intervalle (70) comprend en outre un embrayage unidirectionnel (74) pour (i), quand l'élément mobile (52) se déplace vers un côté en direction de l'axe de rotation, permettre la transmission d'une force qui permet à la portion de vis femelle (72) de tourner par rapport à la portion de vis mâle (71) circonférentiellement dans une direction, et (ii), quand l'élément mobile (52) se déplace vers l'autre côté en direction de l'axe de rotation, empêcher la transmission d'une force qui permet à la portion de vis femelle (72) de tourner par rapport à la portion de vis mâle (71) circonférentiellement dans l'autre direction.
